# EUROPEAN PATENT APPLICATION

(11) **EP 4 694 492 A1**
(43) Date of publication of application: **11.02.2026**
(21) Application number: 24785407.8
(22) Date of filing: 03.04.2024
(51) Int. Cl.: H04W 72/232, H04W 72/04, H04W 72/0457, H04L 5/00, H04W 72/12, H04L 27/26

(54) **DEVICE AND METHOD FOR MULTI-CELL SCHEDULING IN WIRELESS COMMUNICATION SYSTEM**

(30) Priority: 04.04.2023 KR 20230044265; 18.04.2023 KR 20230050963; 15.09.2023 KR 20230122866; 27.09.2023 KR 20230130203; 02.04.2024 KR 20240044531
(71) Applicant: Electronics and Telecommunications Research Institute, Daejeon 34129 (KR)
(72) Inventor: MOON, Sung Hyun, Daejeon 34129 (KR); KIM, Cheul Soon, Daejeon 34129 (KR); LEE, Jung Hoon, Daejeon 34129 (KR)
(74) Representative: Betten & Resch
(86) International application number: PCT/KR2024/095655
(87) International publication number: WO 2024/210718

(57) **Abstract**

An apparatus and a method thereof for multi-cell scheduling in a wireless communication system are proposed. The method includes receiving configuration information from a base station (BS), designating multiple serving cells including a first serving cell and a second serving cell as a cell group on the basis of the configuration information, performing a PDCCH monitoring operation for receiving a downlink control information (DCI) for scheduling the cell group in a physical downlink control channel (PDCCH) search space set, receiving the DCI from the BS on the basis of the PDCCH monitoring operation, identifying scheduling information for N number of the serving cells belonging to the cell group, and receiving data channels in at least one of the N number of the serving cells on the basis of the scheduling information.

## Description

### Technical Field

The present disclosure generally relates to a wireless communication system and, more particularly, to an apparatus and a method thereof for multi-cell scheduling in a wireless communication system.

### Background Art

Mobile communication systems are core infrastructures for driving the ICT industry and continue to evolve while overcoming the limitations of conventional systems. The mobile communication systems aim to provide advanced services in usage scenarios of enhanced Mobile BroadBand (eMBB), Ultra Reliable Low Latency Communication (URLLC), massive Machine Type Communication (mMTC), ultra-low power, ultra-precision, ultra-wide coverage, etc., and efforts are continuously being made to secure new communication frequency bands in a mid-band spectrum and a high-band spectrum in order to achieve various performance indicators.

In particular, in order to provide high levels of maximum transmission capacity (i.e., peak data rates), a technology for aggregating a plurality of carriers into a user equipment (UE) is essential, and in this regard, research is required on a method for maximizing the aggregation efficiency and minimizing the control signaling overhead.

### Disclosure

### Technical Problem

Based on the discussion as described above, the present disclosure provides an apparatus and a method thereof for multi-cell scheduling in a wireless communication system.

In addition, the present disclosure provides an apparatus and a method thereof for scheduling a single serving cell among a plurality of scheduling cells in a wireless communication system.

In addition, the present disclosure provides an apparatus and a method thereof for blind decoding/control channel element (BD/CCE) counting for multi-cell downlink control information (DCI) monitoring in a wireless communication system.

In addition, the present disclosure provides an apparatus and a method thereof for secondary cell (SCell) dormancy/non-dormancy indication by using a multi-cell DCI in a wireless communication system.

### Technical Solution

According to various exemplary embodiments of the present disclosure, there is provided a method of operating a user equipment (UE) in a wireless communication system, the method including: receiving configuration information from a base station (BS); designating a plurality of serving cells including a first serving cell and a second serving cell as a cell group on the basis of the configuration information; performing a PDCCH monitoring operation for receiving a downlink control information (DCI) for scheduling the cell group in a physical downlink control channel (PDCCH) search space set; receiving the DCI from the base station on the basis of the PDCCH monitoring operation; identifying scheduling information for N number of the serving cell(s) belonging to the cell group; and receiving data channel(s) in at least one of the N number of the serving cell(s) on the basis of the scheduling information.

According to various exemplary embodiments of the present disclosure, there is provided an apparatus as a user equipment (UE) in a wireless communication system, the user equipment including: at least one transceiver; and a processor operably connected to the at least one transceiver, wherein the processor may be configured to receive configuration information from a base station (BS), designate a plurality of serving cells including a first serving cell and a second serving cell as a cell group on the basis of the configuration information, perform a PDCCH monitoring operation for receiving a downlink control information (DCI) for scheduling the cell group in a physical downlink control channel (PDCCH) search space set, receive the DCI from the base station on the basis of the PDCCH monitoring operation, identify scheduling information for N number of the serving cell(s) belonging to the cell group, and receive data channel(s) in at least one of the N number of the serving cell(s) on the basis of the scheduling information.

According to various exemplary embodiments of the present disclosure, there is provided a method of operating a base station in a wireless communication system, the method including: transmitting configuration information to a user equipment (UE); transmitting a downlink control information (DCI) to the UE; and transmitting at least one of data channel(s) on the basis of scheduling information for N number of serving cells composed in the DCI, wherein N may be a positive integer, the base station may include the plurality of serving cells including a first serving cell and a second serving cell, the plurality of serving cells may be identified as a cell group on the basis of the configuration information, and the plurality of serving cells may include the N number of serving cell(s).

### Advantageous Effects

The apparatus and the method thereof according to various exemplary embodiments of the present disclosure may schedule multi cells with a single downlink control information (DCI) for a UE configured with carrier aggregation (CA), thereby enabling control signaling overhead to be reduced and spectral efficiency to be increased.

The effects of the present disclosure are not limited to the above-mentioned effects, and other effects that are not mentioned will be clearly understood by those skilled in the art from the following description.

### Description of Drawings

FIG. 1 is a view illustrating a first exemplary embodiment of a method of a single DCI multi-cell scheduling according to an exemplary embodiment of the present disclosure.
FIG. 2 is a view illustrating a first exemplary embodiment of a method of scheduling a single serving cell in a plurality of scheduling cells according to the exemplary embodiment of the present disclosure.
FIG. 3 is a view illustrating a second exemplary embodiment of a method of scheduling a single serving cell in a plurality of scheduling cells according to the exemplary embodiment of the present disclosure.
FIG. 4 a view illustrating a second exemplary embodiment of a method of performing single DCI multi-cell scheduling according to the exemplary embodiment of the present disclosure.
FIG. 5 is a conceptual diagram illustrating a third exemplary embodiment of a method of performing single DCI multi-cell scheduling according to the exemplary embodiment of the present disclosure.
FIG. 6 is a view illustrating a method of operating a UE according to the exemplary embodiment of the present disclosure.
FIG. 7 is a view illustrating a method of operating a base station according to the exemplary embodiment of the present disclosure.
FIG. 8 is a view illustrating a configuration diagram of a UE in a wireless communication system according to various exemplary embodiments of the present disclosure.
FIG. 9 is a view illustrating a configuration diagram of a base station in a wireless communication system according to various exemplary embodiments of the present disclosure.

### Best Mode

The terms used in the present disclosure are only used to describe specific exemplary embodiments, and may not be intended to limit the scope of other exemplary embodiments. As used herein, the singular forms may include the plural forms as well, unless the context clearly indicates otherwise. The terms including technical and scientific terms used herein have the same meaning as commonly understood by those skilled in the art described in the present disclosure. Among the terms used in the present disclosure, terms defined in a general dictionary may be interpreted as having the same or similar meaning as the meaning in the context of the related art, and are not interpreted in an ideal or excessively formal meaning unless explicitly defined in the present disclosure. In some cases, even the terms defined in the present disclosure may not be interpreted to exclude the exemplary embodiments of the present disclosure.

In various exemplary embodiments of the present disclosure described below, a hardware approach method is described as an example. However, since the various exemplary embodiments of the present disclosure include technology using both hardware and software, the various exemplary embodiments of the present disclosure do not exclude a software-based approach method.

In addition, in the detailed description and claims of the present disclosure, "at least one of A, B, and C" may mean "only A", "only B", and "only C", or may mean "any combination of A, B, and C". In addition, "at least one of A, B, or C" or "at least one of A, B, and/or C" may mean "at least one of A, B, and C".

Hereinafter, the present disclosure generally relates to a wireless communication system and, more particularly, to an apparatus and a method thereof for multi-cell scheduling in a wireless communication system. Specifically, the present disclosure describes a technology for aggregating a plurality of carriers to a user equipment (UE), and a technology for efficiently scheduling the plurality of carriers in the wireless communication system.

In the following description, terms referring to signals, terms referring to channels, terms referring to control information, terms referring to network entities, terms referring to components of a device, and the like are illustrated for convenience of the description. Accordingly, the present disclosure is not limited to the terms described below, but other terms having equivalent technical meanings may be used.

In addition, the present disclosure describes various exemplary embodiments by using terms used in some communication standards (e.g., 3rd Generation Partnership Project, 3GPP), but this is only an example for description. Various exemplary embodiments of the present disclosure may be easily modified and applied to other communication systems.

The present disclosure relates to a method of aggregating a plurality of carriers into a UE, and a method of efficiently scheduling the plurality of carriers in a wireless communication system and an apparatus thereof. The exemplary embodiments of the present disclosure may be applied to an NR communication system. In addition, the exemplary embodiments in the present disclosure may be applied to other communication systems (e.g., a LTE communication system, a fifth generation (5G) communication system, a sixth generation (6G) communication system, etc.) in addition to the NR communication system.

In a wireless communication system (e.g., a new radio (NR) communication system), numerology applied to physical signals and channels may be variable. The numerology may be varied to meet various technical requirements of communication systems. In communication systems where cyclic prefix (CP)-based orthogonal frequency division multiplexing (OFDM) waveform technology is applied, the numerology may include subcarrier spacings and CP lengths (or CP types).

Table 1 illustrates a first exemplary embodiment of a numerology configuration for a CP-OFDM-based communication system.

**[Table 1]**

| Subcarrier spacing | 15 kHz | 30 kHz | 60 kHz | 120 kHz | 240 kHz | 480 kHz | 960 kHz |
|---|---|---|---|---|---|---|---|
| OFDM symbol length [us] | 66.7 | 33.3 | 16.7 | 8.3 | 4.2 | 2.1 | 1.0 |
| CP length [us] | 4.76 | 2.38 | 1.19 | 0.60 | 0.30 | 0.15 | 0.07 |
| OFDM symbol count per 1 ms | 14 | 28 | 56 | 112 | 224 | 448 | 896 |

Referring to Table 1, subcarrier spacings may have a power-of-2 multiplication relationship with each other, and a CP length may be scaled at the same rate as an OFDM symbol length. At least some of numerologies in Table 1 may be supported depending on frequency bands with which a communication system operates. In addition, numerologies not listed in Table 1 may additionally be supported in the communication system. For a specific subcarrier spacing (e.g., 60 kHz), CP type(s) not listed in Table 1 (e.g., an extended CP) may additionally be supported.

When a frame structure of a wireless communication system is described, elements constituting the frame structure in a time domain may include subframes, slots, and mini-slots. A subframe may be used as a unit for transmission, measurement, etc., and a length of subframe may have a fixed value (e.g., 1 ms) regardless of a subcarrier spacing. A slot may include consecutive symbols (e.g., 14 OFDM symbols). The length of a slot may be variable, which is different from the length of a subframe, and may be inversely proportional to the subcarrier spacing.

A slot may be used as a unit for transmission, measurement, scheduling, resource configuration, timing (e.g., scheduling timing, hybrid automatic repeat request (HARQ) timing, channel state information (CSI) measurement and reporting timing, etc.). The length of an actual time resource used for transmission, measurement, scheduling, resource configuration, etc. may or may not match the length of slot. A mini-slot may include consecutive symbols, and the length of mini-slot may be shorter than the length of slot. The mini-slot may be used as a unit for transmission, measurement, scheduling, resource configuration, timing, etc. The mini-slot (e.g., the length of mini-slot, the boundary of mini-slot, etc.) may be predefined in the technical specifications or may be configured (or indicated) to a UE. The UE may be configured (or indicated) so as to use a mini-slot in a case of satisfying specific conditions.

A base station may schedule data channels (e.g., a physical downlink shared channel (PDSCH), a physical uplink shared channel (PUSCH), and a physical sidelink shared channel (PSSCH)) by using some or all of symbols constituting a slot. In particular, the data channels may be transmitted by using only a part of the slot in order to perform URLLC transmission, unlicensed band transmission, transmission in a situation of coexistence between an NR communication system and an LTE communication system, multi-user scheduling based on analog beamforming, etc. In addition, the base station may schedule the data channels by using a plurality of slots. In addition, the base station may schedule the data channels by using at least one mini-slot.

Elements constituting a frame structure in a frequency domain may include resource blocks (RBs), subcarriers, etc. One RB may include consecutive subcarriers (e.g., 12 subcarriers). The number of subcarriers constituting one RB may be constant regardless of numerology. In this case, a bandwidth occupied by one RB may be proportional to a subcarrier spacing in the numerology. An RB may be used as units of transmission and resource allocation for a data channel, a control channel, etc. The resource allocation of the data channel may be performed in units of RBs or a RB group (e.g., a resource block group (RBG)). One RBG may include one or more consecutive RBs. The resource allocation of the control channel may be performed in units of control channel element (CCE). In a frequency domain, one CCE may include one or more RBs.

In a wireless communication system, a unit time resource (hereinafter referred to as a "slot") described above may include a combination of one or more of the following periods: a downlink (DL) period, a flexible period (or an unknown period), and an uplink (UL) period. Each of the downlink period, the flexible period, and the uplink period may be configured with one or more consecutive symbols. A flexible period may be located between a downlink period and an uplink period, between a first downlink period and a second downlink period, between a first uplink period and a second uplink period, etc. In a case where the flexible period is inserted between the downlink period and the uplink period, the flexible period may be used as a guard period.

A slot may include one or more flexible periods. Alternatively, the slot may include no flexible period. In a flexible period, a UE may perform predefined operations or perform operations, which are semi-statically or periodically configured from a base station, (for example, a physical downlink control channel (PDCCH) monitoring operation, a synchronization signal block (SSB) reception and measurement operation, a CSI-reference signal (CSI-RS) reception and measurement operation, a downlink semi-persistent scheduling (SPS) PDSCH reception operation, a sounding reference signal (SRS) transmission operation, a physical random access channel (PRACH) transmission operation, a periodically configured PUCCH transmission operation, a PUSCH transmission operation according to a configured grant (CG), and the like). Flexible symbols may be overridden with downlink symbols or uplink symbols. In a case where the flexible symbols are overridden with the downlink or uplink symbols, the UE may perform a new operation instead of the existing operation in the corresponding flexible symbols.

According to the exemplary embodiment of the present disclosure, a synchronization signal block (SSB) may mean a set of signals including synchronization signals and/or a broadcast channel. The synchronization signals may include a primary synchronization signal (PSS), a secondary synchronization signal (SSS), etc., and the broadcast channel may include a physical broadcast channel (PBCH).

In addition, an SSB may further include reference signals. The reference signals may mean a demodulation reference signal (DM-RS) for decoding a PBCH, a channel state information-reference signal (CSI-RS), a tracking reference signal (TRS), a positioning reference signal (PRS), a phase tracking reference signal (PT-RS), and the like. In an NR communication system, the SSB may mean a synchronization signal/physical broadcast channel (SS/PBCH) block. The SSB may be transmitted periodically, and one or more SSBs may be repeatedly transmitted in one period.

The format of unit time resource (hereinafter referred to as a "slot format") may be semi-statically configured by higher layer signaling (e.g., radio resource control (RRC) signaling). Information indicating the semi-static slot format may be included in system information, and the semi-static slot format may be configured cell-specifically. In addition, the semi-static slot format may be additionally configured for each UE through UE-specific higher layer signaling (e.g., RRC signaling). A flexible symbol of a slot format configured cell-specifically may be overridden with a downlink symbol or an uplink symbol by the UE-specific higher layer signaling. In addition, the slot format may be dynamically indicated by physical layer signaling (e.g., a slot format indicator (SFI) included in a downlink control information (DCI)). The slot format configured semi-statically may be overridden by the dynamically indicated slot format. For example, a flexible symbol configured semi-statically may be overridden with a downlink symbol or a uplink symbol by an SFI.

The UE may perform a downlink operation, an uplink operation, a sidelink operation, and the like in bandwidth parts (BWPs). The bandwidth parts may be defined as a set of consecutive RBs (e.g., physical resource blocks (PRBs)) in a frequency domain having a specific numerology. Only one numerology may be used for signal transmission (e.g., transmission of a control channel or a data channel) in one bandwidth part. In the present disclosure, the term "signals" may mean arbitrary physical signals and channels when used in a broad sense. The UE performing an initial access procedure may obtain configuration information of an initial bandwidth part from a base station through system information. The UE operating in an RRC connected state may obtain the configuration information of the bandwidth part from the base station through UE-specific higher layer signaling.

The configuration information of the bandwidth parts may include information about numerologies and/or RB sets applied to the bandwidth parts. At least one of the bandwidth parts among the bandwidth parts configured in the UE may be activated. For example, each of one uplink bandwidth part and one downlink bandwidth part may be activated within one carrier. In a time division duplex (TDD)-based communication system, a pair of one uplink bandwidth part and one downlink bandwidth part may be activated. The base station may configure a plurality of bandwidth parts to the UE within one carrier, and may switch an active bandwidth part of the UE.

According to the exemplary embodiment, "a certain frequency band (e.g., a carrier, a bandwidth part, an RB set, a listen before talk (LBT) subband, a guard band, etc.) is activated" may mean "a base station or a UE is in a state capable of transmitting and receiving signals by using a corresponding frequency band". In addition, "a certain frequency band is activated" may mean "a state where a radio frequency (RF) filter (e.g., a band pass filter) of a transceiver is operating by including a frequency band".

According to the exemplary embodiment, a RB may mean a common RB (CRB). Alternatively, the RB may mean a PRB or a virtual RB (VRB). In an NR communication system, CRBs may mean RBs constituting a set of RBs (i.e., a common RB grid) arranged consecutively on the basis of a reference frequency (e.g., point A). Carriers, bandwidth parts, etc. may be arranged on the common RB grid. That is, the carriers, bandwidth parts, etc. may be configured as the CRBs. The RBs or CRBs that configure bandwidth parts may be referred to as PRBs, and CRB indexes within the bandwidth parts may be appropriately converted to PRB indexes. In a certain exemplary embodiment, an RB may mean an interlace RB (IRB).

A PDCCH may be used to transmit a DCI or a DCI format to a UE. A minimum resource unit configuring the PDCCH may be a resource element group (REG). For example, the REG may be configured with one RB in a frequency domain and one OFDM symbol in a time domain. DM-RSs for decoding PDCCHs may be mapped to some of REs constituting the REG, and control information (e.g., modulated DCI) may be mapped to the remaining REs. One PDCCH candidate may be configured with one CCE or aggregated CCEs. One CCE may be composed of a plurality of REGs. In the NR communication system, CCE aggregation levels 1, 2, 4, 8, 16, etc. may be supported, and one CCE may be composed of 6 REGs.

A control resource set (CORESET) may be a resource area where a UE performs blind decoding of a PDCCH. The CORESET may be configured with a plurality of REGs. The CORESET may be configured with one or more RBs in a frequency domain and one or more symbols (e.g., OFDM symbols) in a time domain. The symbols constituting one CORESET may be continuous in the time domain. The RBs constituting one CORESET may be continuous or discontinuous in the frequency domain. One DCI (e.g., one DCI format, one PDCCH) may be transmitted within one CORESET. A plurality of CORESETs may be configured from a cell perspective or a UE perspective, and time-frequency resource areas to which the plurality of CORESETs is mapped may or may not overlap each other.

A CORESET may be configured in a UE during an initial access procedure. For example, the CORESET may be configured in the UE by an initial access signal (e.g., a PBCH or system information transmitted through the PBCH). An identifier (ID) of the CORESET configured by the initial access signal may be 0. The CORESET that is set by the initial access signal may be referred to as CORESET 0. The UE operating in an RRC idle state may perform a monitoring operation in CORESET 0 in order to receive a first PDCCH in the initial access procedure. Not only the UE operating in the RRC idle state but also a UE operating in an RRC connected state may perform the monitoring operation in CORESET 0. In addition to the system information transmitted through the initial access signal (e.g., the PBCH), the CORESET may be configured in the UE by other system information (e.g., system information block type 1 (SIB 1). For example, the UE may receive an SIB 1 including configuration information of the CORESET in order to receive a random access response (or Msg2). In addition, the CORESET may be configured in the UE by UE-specific higher layer signaling (e.g., RRC signaling).

A search space may mean a set of candidate resource areas where a PDCCH is able to be transmitted. The UE may perform blind decoding for each of PDCCH candidates within the search space predefined or configured by the base station. The UE may determine whether or not the PDCCH has been transmitted to the UE itself by performing a cyclic redundancy check (CRC) on a blind decoding result. In a case where the PDCCH is determined to be a PDCCH for the UE, the UE may receive the PDCCH.

One or more of search spaces may constitute a search space set. Each search space may be defined/configured for each CCE aggregation level, and the search space set may mean a search space for each CCE aggregation level or a sum of search spaces for all the CCE aggregation levels. For each CCE aggregation level, PDCCH candidates may be configured with CCEs selected by a predefined hash function within a CORESET or search space occasion. In the exemplary embodiment, the "search space set" may mean a "search space".

A search space set may be logically associated with (or combined with) one CORESET. One CORESET may be logically associated with one or more search space sets. A common search space set configured through a PBCH may be used to monitor a DCI configured to schedule a PDSCH for transmitting an SIB 1. An ID of the common search space set configured through the PBCH may be set to 0. That is, the common search space set configured through the PBCH may be defined as a type 0 PDCCH common search space set or a search space set #0. The search space set #0 may be logically associated with CORESET 0.

A search space set may be divided into a common search space set and a UE-specific search space set depending on the use or UE operation thereof. The common DCI or UE-specific DCI may be transmitted in the common search space set, and the UE-specific DCI may be transmitted in the UE-specific search space set. For example, a common DCI may include system information, PDSCH resource allocation information including paging messages and the like, a power control command, a slot format indicator (SFI), a preemption indicator, etc. The UE-specific DCI may include PDSCH resource allocation information, PUSCH resource allocation information, etc. A plurality of DCI formats may be defined depending on the use, and the plurality of DCI formats may be distinguished in the UE by a DCI payload, a DCI field, a DCI size, a radio network temporary identifier (RNTI), etc.

According to the exemplary embodiment of the present disclosure, the above-described common search space may be referred to as a common search space (CSS), and a set of common search spaces may be referred to as a CSS set. In addition, a search space specific to the UE may be referred to as a UE-specific search space (USS), and the set of UE-specific search spaces may be referred to as a USS set.

Meanwhile, the UE may support a carrier aggregation (CA) method. That is, the UE may receive configuration information of the plurality of carriers from the base station, aggregate the plurality of carriers, and perform communication with the base station by using the aggregated carriers. According to the exemplary embodiment, it may be interpreted to mean that a carrier is a cell or a serving cell, and it may be interpreted to mean that each of the cell and the serving cell is a carrier. In the NR communication system, up to 16 carriers may be aggregated in one UE. In a case where the maximum carrier bandwidth is 400 MHz, one UE may perform communications by using a bandwidth of up to 6.4 GHz (= 16 x 400 MHz). Accordingly, a peak transmission rate of the UE may increase. The aggregated carriers may be adjacent to each other in a frequency domain. Alternatively, the aggregated carriers may not be adjacent in the frequency domain. In addition, the plurality of carriers may belong to the same frequency band, or belong to frequency bands different from each other. In each of the carriers, one or more downlink bandwidth parts and one or more uplink bandwidth parts may be configured, and in a specific carrier, a sidelink bandwidth part may additionally be configured. The UE may perform communications (e.g., transmission operations, reception operations, and measurement operations) in active bandwidth parts of the activated carriers.

The UE with the carrier aggregation method applied thereto may have one primary cell(PCell) and one or more secondary cells(SCells). The UE may determine the PCell during an initial cell search procedure, a cell reselection procedure, a handover procedure, etc. In contrast, each SCell may be configured in the UE (e.g., the UE in an RRC connected state) through a signaling message (e.g., an RRC signaling message) transmitted from a base station. Each SCell may be activated or deactivated. The activation and/or deactivation of each SCell may be controlled through signaling messages (e.g., downlink control information (DCI) signaling, medium access control (MAC) control element (CE) signaling, radio resource control (RRC) signaling, etc.) transmitted from the base station. The PCell and each SCell may be configured UE-specifically. For example, the same serving cell may operate as a PCell for a first UE and as a SCell for a second UE. Alternatively, a plurality of UEs may use serving cells different from each other as PCells. In a frequency division duplex (FDD) cell, a serving cell may be composed of a downlink carrier and/or an uplink carrier. In addition, the serving cell may include a plurality of uplink carriers and/or a plurality of downlink carriers. In a case where the serving cell includes the plurality of uplink carriers, the serving cell may include a supplementary uplink carrier. In a case where the serving cell includes the plurality of downlink carriers, the serving cell may include a supplementary downlink carrier. In a case where the UE performs a dual connectivity operation, the exemplary embodiments of the present disclosure may be applied to a secondary cell group (SCG) configured in the UE, and the PCell may mean a PSCell.

In a case where the carrier aggregation method is used, a DCI (or a PDCCH) configured to schedule a data channel may be transmitted over the same carrier as a carrier over which the corresponding data channel is transmitted. This method may be referred to as a self-scheduling method. Alternatively, the DCI (or the PDCCH) for scheduling the data channel may be transmitted over a carrier, which is different from the carrier over which the data channel is transmitted. This method may be referred to as a cross-carrier scheduling method. The cross-carrier scheduling method may be used for purposes such as offloading of control channels, interference control between the control channels, etc. In this case, the data channel may be a data channel including unicast data or UE-specific data (e.g., a downlink-shared channel (DL-SCH) and/or an uplink-shared channel (UL-SCH)). In addition, the DCI for scheduling the data channel may mean a DCI (or a DCI format) having a CRC scrambled by a C-RNTI, a CS-RNTI, or a MCS-C-RNTI. Either the self-scheduling method or the cross-carrier scheduling method may be applied to each carrier or each serving cell.

In the present disclosure, a carrier over which a scheduling DCI is transmitted may be referred to as a scheduling cell, and a carrier over which a data channel is transmitted may be referred to as a scheduled cell. In a case where the self-scheduling method is used, the scheduling cell may be the same as the scheduled cell. In a case where the cross-carrier scheduling method is used, the scheduling cell may be different from the scheduled cell. The UE may perform a PDCCH monitoring operation, which corresponds to the scheduled cell, in the scheduling cell. An association relationship between the scheduling cell and the scheduled cell may be configured in the UE through higher layer signaling (e.g., RRC signaling and an MAC CE procedure).

In addition, the scheduling cell may be used by the base station to transmit scheduling information to the UE, and the scheduled cell may be used to transmit data scheduled by the scheduling cell.

According to the exemplary embodiment, a PDCCH monitoring operation corresponding to a scheduled cell may mean an operation in which the UE monitors a PDCCH from a scheduling cell, receives scheduling information, and determines which resource to use to receive data in a scheduled cell on the basis of the scheduling information. The PDCCH may provide the UE with the scheduling information for downlink data transmission, i.e., the information about which resource block to use and when to use this resource block.

According to the conventional scheduling method, only a single serving cell may be scheduled by a single DCI. That is, the single DCI includes scheduling information for a single serving cell. Accordingly, in order to schedule a plurality of aggregated cells, a plurality of DCIs should be transmitted to the UE, and in proportion to the number of aggregated carriers, control signaling overhead may increase and spectral efficiency may decrease. As a method to solve such a problem, a method of scheduling a plurality of serving cells through a single DCI may be considered. In the present disclosure, the scheduling method and the device thereof described above may be referred to as a multi-cell scheduling method, a single DCI multi-cell scheduling method, or the like. In addition, a DCI may be referred to as a multi-cell DCI, a multi-cell DCI format, etc.

A serving cell may refer to a cell providing a service to a UE. In a multi-cell environment, multiple serving cells may transmit data to the UE simultaneously, but DCI, which is actual control information transmitted through a PDCCH, was configured to include scheduling information for a single serving cell.

The present disclosure describes a method capable of scheduling a plurality of serving cells by allowing a single DCI to include scheduling information for multi-cells and an apparatus thereof.

### [Method of setting up set of cells and configuring multi-cell DCI]

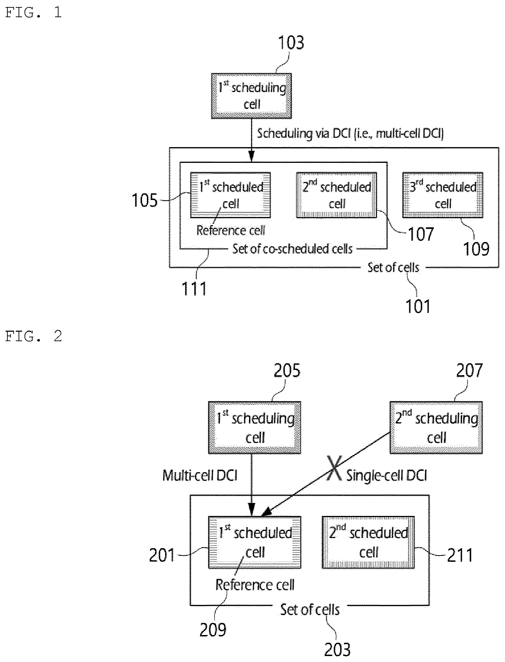

FIG. 1 is a view illustrating a first exemplary embodiment of a method of performing a single DCI multi-cell scheduling according to an exemplary embodiment of the present disclosure.

Referring to FIG. 1, at least three carriers (or serving cells) may be configured in a UE, and carrier aggregation may be applied to the configured carriers. In this case, a plurality of serving cells may be scheduled simultaneously by a single DCI, i.e., a multi-cell DCI, transmitted from a single serving cell. That is, a base station may coordinate data transmission schedules of multiple serving cells with the single DCI.

In the present disclosure, a set of serving cells that may be simultaneously scheduled by a multi-cell DCI may be referred to as a "set of cells 101", a "set of candidate cells", a "list of serving cells", etc. The set of cells 101 may be configured in the UE. For example, information about the set of cells may be transmitted to the UE by the higher layer signaling procedure (e.g., the RRC signaling and the MAC CE). The set of cells 101 may be interrelated with a single scheduling cell. The interrelationship may be configured in the UE on the basis of higher layer signaling messages (e.g., configuration information of search space sets). A scheduling cell 103 may match any one of scheduled cells 105, 107, and 109 belonging to the set of cells 101. Alternatively, the scheduling cell 103 may be the serving cell not belong to the set of cells.

According to the exemplary embodiment, the scheduling cell 103 may be a first scheduling cell. In addition, the set of cells 101 may include a first scheduled cell 105, a second scheduled cell 107, and a third scheduled cell 109.

The UE may monitor a multi-cell DCI in a scheduling cell, and in a case where the reception of the multi-cell DCI is successful, and may be scheduled with PDSCHs or PUSCHs in one or more cells belonging to the set of cells. The scheduled cells 105 and 107 simultaneously scheduled by the multi-cell DCI may be referred to as a "set of co-scheduled cells 111", "co-scheduled cells", a "set of scheduled cells", a "list of scheduled cells", etc. The "set of co-scheduled cells 111" may be a subset of the "set of cells 101".

According to the first exemplary embodiment, the set of co-scheduled cells 111 may be composed of a first scheduled cell 105 and a second scheduled cell 107. According to the exemplary embodiment, a base station may instantaneously determine a set of co-scheduled cells 111 for each scheduling. That is, the set of co-scheduled cells 111 may be dynamically changed for each scheduling opportunity.

In order to normally obtain scheduling information included in a multi-cell DCI, the UE may be indicated with the set of co-scheduled cells 111 scheduled by the multi-cell DCI. For example, information indicating the set of co-scheduled cells 111 may be included in the multi-cell DCI.

According to the exemplary embodiment, a multi-cell DCI may include a field containing indication information of co-scheduled cells in an explicit manner. For example, respective code points in the field may correspond to respective combinations of serving cells. The field may have a fixed size (i.e., the number of bits) regardless of the number of co-scheduled cells. For example, a size of the field may be determined by the number of candidate serving cell combinations (or co-scheduled cell combinations).

According to another exemplary embodiment, a size of any other field (hereinafter referred to as a "first field") in a multi-cell DCI may be variable depending on the number of co-scheduled cells. For example, a size of a field indicating resources of PDSCH or PUSCH (e.g., time resources and/or frequency resources) may increase or decrease in proportion to the number of co-scheduled cells. That is, the size of the first field may be determined independently for each DCI transmission. For example, the first field may be composed of M number of block(s) (where M is a natural number). Each block may correspond to indication information for each serving cell.

According to the exemplary embodiment, M may be determined as a value equal to the cardinality of a set of co-scheduled cells. In this case, a location to which a field indicating the set of co-scheduled cells within a payload of the multi-cell DCI is mapped may be fixed regardless of the size of the first field. As a way to ensure this, the field indicating the set of co-scheduled cells 111 may be mapped to a position (e.g., the most significant bit (MSB) or a bit closer to MSB) preceding the first field within the DCI payload. In contrast, the first field may be variable not only in size but also in mapping location thereof. The UE may first read the field indicating the set of co-scheduled cells 111 at the fixed bit position to check the number of co-scheduled cells, and determine the size and mapping position of the first field on the basis of the number of co-scheduled cells checked, thereby obtaining information included in the first field. Based on the information included in the first field, the UE may perform transmission operation for PDSCHs or PUSCHs in the indicated serving cell(s).

According to another exemplary embodiment, in a case where a specific code point is not used in a DCI field defined for another use, the specific code point may be utilized for indicating a set of co-scheduled cells. For example, the fact that a specific field of a multi-cell DCI (or a specific block within the specific field) is configured as a specific code point may be considered as a case where scheduled cell(s) corresponding to code points are not scheduled by the multi-cell DCI. The specific field (or the specific block within the specific field) may correspond to a single scheduled cell. In this case, the specific fields in the multi-cell DCI may be present as many as the serving cells constituting the set of cells, regardless of the number of cells that are actually scheduled (e.g., the set of co-scheduled cells). Equivalently, the specific field may be composed of N number of block(s) (where N is a natural number). Each field or each block may correspond to indication information for each serving cell.

According to a yet another exemplary embodiment, N may be determined as a value equal to the cardinality of a set of cells. In addition, a specific field may be a field indicating resources of PDSCH or PUSCH (e.g., time resources and/or frequency resources).

Similar to the explicit signaling method described above, a UE may read specific field(s) at fixed bit positions within a payload of a multi-cell DCI. As a way to ensure a UE operation, all fields that are mapped to the positions (e.g., MSBs or bits closer to MSBs) preceding particular field(s) may each have a predetermined size (i.e., the number of bits), regardless of the size of the set of co-scheduled cells.

In contrast, a field mapped to a following part (e.g., the least significant bits (LSBs) or bits closer to LSBs) later than the specific field(s) may have a variable size depending on the size of the set of co-scheduled cells 111. This does not affect the mapping locations of the specific field(s), so the UE operation may still be ensured.

According to the exemplary embodiment, a downlink multi-cell DCI may include scheduling information of a PDSCH allocated to each of the set of scheduled cells. In the NR communication system, a downlink multi-cell DCI format may be referred to as a DCI format 1_X (e.g., X = 3). An uplink multi-cell DCI may include scheduling information of a PUSCH for each of the co-scheduled cells.

In the NR communication system, an uplink multi-cell DCI format may be referred to as a DCI format 0_X (e.g., X = 3). The multi-cell DCI format may be distinguished from the DCI format for scheduling a single cell by DCI payload size. In general, the multi-cell DCI format may have a larger payload than that of the single-cell DCI format for scheduling the same cell. However, depending on the configuration of RRC or MAC CE applied to the UE, it is also possible for the single-cell DCI format to have a larger payload than that of the multi-cell DCI format. The set of cells 101 may be commonly applied to multi-cell PDSCH scheduling and multi-cell PUSCH scheduling. However, the set of co-scheduled cells 111 may be configured differently without restriction between the multi-cell PDSCH scheduling and the multi-cell PUSCH scheduling.

One or more PDSCHs may be allocated to each scheduled cell being scheduled by a multi-cell DCI. In one scheduled cell, each PDSCH may have its own TB (or downlink-shared channel (DL-SCH)). Alternatively, a plurality of PDSCHs for configuring PDSCH repetitive transmissions may be allocated, and the plurality of PDSCHs may include the same TBs. In this case, the number of PDSCH repetitive transmissions for each scheduled cell may be transmitted to the UE in advance or through the multi-cell DCI for scheduling the PDSCH repetitive transmissions. In addition, each scheduled cell scheduled by the multi-cell DCI may be allocated with one or more PUSCHs. In one scheduled cell, each PUSCH may have its own TB (or uplink-shared channel (UL-SCH)). Alternatively, the plurality of PUSCHs corresponding to the same TBs may be repeatedly transmitted. In this case, the number of PUSCH repetitive transmissions for each scheduled cell may be transmitted to the UE in advance or through the multi-cell DCI for scheduling the PUSCH repetitive transmissions.

A PUSCH allocated to a certain scheduled cell may not include a TB or a UL-SCH. In this case, the PUSCH may include UCI (e.g., CSI reporting). The PUSCH configuration may be indicated at least by a UL-SCH indication field. That is, information about whether the TB or UL-SCH of the PUSCH allocated to the certain scheduled cell is included or not may be indicated to the UE by the UL-SCH indication field included in the multi-cell DCI.

According to the exemplary embodiment, the certain scheduled cell described above may be determined by a predefined rule. For example, a certain scheduled cell may be determined as a serving cell, having the smallest serving cell index, among the co-scheduled cell(s). Among the co-scheduled cells, PUSCHs allocated to the remaining scheduled cell(s) excluding the certain scheduled cell should include TBs or UL-SCHs.

The scheduling information of the multi-cell DCI may include time domain resource allocation (TDRA) information of PDSCH or PUSCH (hereinafter collectively referred to as PDSCH) of each scheduled cell. The TDRA information of a plurality of cells may be indicated by a TDRA field. Specifically, respective code points in the TDRA field may indicate respective candidate cell combinations, which may be scheduled by the multi-cell DCI, and the TDRA information thereof.

According to a first exemplary embodiment, a candidate cell combination that may be co-scheduled for a set of cells may include {first scheduled cell}, {second scheduled cell}, {third scheduled cell}, {first scheduled cell, second scheduled cell}, {first scheduled cell, third scheduled cell}, {second scheduled cell, third scheduled cell}, {first scheduled cell, second scheduled cell, third scheduled cell}, and the like. The candidate cell combination may have to include at least one cell.

TDRA information for each cell combination may include a start symbol and a length (or, a start and length indicator value (SLIV)) of a PDSCH scheduled to each cell for constituting cell combinations, a slot offset, a PDSCH mapping type, etc. In a case where the PDSCH is transmitted repeatedly, the TDRA information may additionally include the number of repetitive transmissions. The PDSCH (or the PUSCH) repetitive transmissions may be applied only to some cells among the cells simultaneously scheduled by the multi-cell DCI. In this case, the TDRA information may indicate the number of repetitive transmissions only for some of the cells. For example, some of the cells may include a cell with PDSCH repetitive transmissions configured or a cell in which a bandwidth part for which PDSCH repetitive transmissions is configured is activated. In the latter case, the TDRA information (e.g., the number of repetitive transmissions) may be updated depending on bandwidth part switching.

According to another exemplary embodiment, whether to perform PDSCH (or PUSCH) repetitive transmissions or not may be commonly configured for all cells belonging to a set of cells.

According to a yet another exemplary embodiment, in order to secure the degree of freedom for scheduling, the number of PDSCH (or PUSCH) repetitive transmissions may be independently configured or indicated for each serving cell.

In a case where a cell combination is composed of a plurality of scheduled cells, a plurality of pieces of TDRA information respectively corresponding to the plurality of cells may be indicated. According to the exemplary embodiment, the cell combination and the corresponding TDRA information may be configured in advance in the UE in the form of a TDRA table by an RRC message. In this case, respective code points of a TDRA field may indicate respective entries or respective rows in the TDRA table. The respective entries or rows may correspond to the respective cell combinations described above and the corresponding TDRA information. A plurality of entries may be configured for the same cell combination.

In this case, each serving cell belonging to a set of cells should be referenced at least once by the TDRA table. In the same context, each serving cell belonging to the set of cells should be referenced at least once by the above candidate co-scheduled cell combinations. That is, each serving cell may be configured as a component of at least one candidate co-scheduled cell combination. When a certain serving cell belongs to the set of cells but is not included in the entries in the TDRA table or the co-scheduled cell combinations, the corresponding serving cell is unable to be scheduled by a multi-cell DCI, so the UE may regard this as an incorrect configuration.

According to the first exemplary embodiment, a first scheduled cell, a second scheduled cell, and a third scheduled cell may be referenced at least once by the TDRA table (or the candidate co-scheduled cell combinations). In other words, each of the serving cells may be indicated (as part of a cell combination) by at least one entry in the TDRA table. At the same time, PDSCH frequency domain resource allocation (FDRA) information transmitted through a multi-cell DCI may include information about all serving cells belonging to a set of cells. For example, when the number of serving cells belonging to the set of cells is N (where N is a natural number, or N is a natural number greater than or equal to 2), the multi-cell DCI may fixedly include N number of FDRA fields (or N number of blocks constituting one FDRA field). Respective FDRA fields (or respective blocks) may indicate the PDSCH (or PUSCH) frequency resources of respective serving cells. That is, all serving cells corresponding to the FDRA fields included in the multi-cell DCI may be referenced at least once by the TDRA table (or the candidate co-scheduled cell combinations).

According to a second exemplary embodiment, each entry (or each row) of the TDRA table may include TDRA information (or information indicating the TDRA information) of all serving cells belonging to a set of cells. For example, when the number of serving cells belonging to a set of cells is N, each row of the TDRA table may include N pieces of indication information, and respective pieces of indication information may be a values indicating TDRA information of respective serving cells. In this case, the UE may identify co-scheduled cells (e.g., M number of co-scheduled cells) through the above-described field of the multi-cell DCI, and may obtain time domain resource allocation information of the co-scheduled cells on the basis of the M pieces of indication information corresponding to the co-scheduled cells identified among the N pieces of indication information corresponding to the code points of a TDRA field. The remaining (N - M) pieces of instruction information may be ignored. The UE may perform a corresponding PDSCH or PUSCH transmission operation on the basis of the above-described indication.

The above-described exemplary embodiments may be extended by taking into account bandwidth parts. Each entry (or each row) of the TDRA table may include TDRA information (or information indicating the TDRA information) about all bandwidth parts of all serving cells belonging to a set of cells. For example, when the number of serving cells belonging to the set of cells is N and L number of bandwidth parts are configured for each serving cell, each row of the TDRA table may include N*L pieces of instruction information. The UE may identify co-scheduled cells (e.g., M number of co-scheduled cells) and an active bandwidth part of each co-scheduled cell through the above-described field of the multi-cell DCI, and may obtain time domain resource allocation information of the co-scheduled cells on the basis of M pieces of indication information corresponding to the active bandwidth parts of the identified co-scheduled cells among the N*L pieces of indication information corresponding to the code points of the TDRA field. In this case, the remaining (N*L - M) pieces of instruction information indicated by the code points may be ignored. The UE may perform a corresponding PDSCH or PUSCH transmission operation on the basis of the M pieces of instruction information corresponding to the active bandwidth parts of the co-scheduled cells.

According to the exemplary embodiment, the number of FDRA fields (or the number of blocks constituting an FDRA field) included in a multi-cell DCI may be variable. For example, the multi-cell DCI may include the FDRA field(s) (or the block(s) within an FDRA field) corresponding to serving cell(s) included in a set of co-scheduled cells, and may not have FDRA fields (or blocks within an FDRA field) for the remaining serving cell(s) belonging to the set of cells. When the number of variable FDRA fields or blocks is M (where M is a natural number), a value of M may be determined by the size of the set of co-scheduled cells and may be indicated to the UE by the multi-cell DCI. That is, the UE may determine the value of M, i.e., the number of FDRA field(s) or the number of block(s), on the basis of the multi-cell DCI, and therefrom, may identify the number of FDRA field(s) or block(s) and the positions of other fields of the DCI (e.g., positions of bits (in a stream) in a payload), and obtain information corresponding to the fields. That is, the value of M may be determined by the specific field having a fixed length in the DCI, and other fields in the DCI may be mapped to positions (e.g., bits (in a stream) closer to MSB) preceding the FDRA field.

A PDSCH or PUSCH (hereinafter collectively referred to as a PDSCH) scheduled by a multi-cell DCI may be dropped. The UE may skip an operation of receiving the PDSCH in a case where the PDSCH scheduled by the multi-cell DCI satisfies a predetermined condition. For example, a PDSCH that overlaps with an uplink symbol (e.g., a semi-statically configured uplink symbol) or an uplink resource (e.g., a PRACH resource) may be dropped. Whether a scheduled PDSCH is received or not (or dropped or not) may be determined by the UE for each scheduled cell. In a case where a plurality of PDSCHs is scheduled in a cell, whether reception is performed or not (or dropping is performed or not) may be determined for each PDSCH or PDSCH instance. As a result, the number of cells scheduled by the multi-cell DCI and the number of cells on which the UE actually performs the PDSCH reception operation may not match. The UE may perform the PDSCH reception operation in some cells among the co-scheduled cells. In a case where a condition is satisfied in all the scheduled cells, the UE may not perform any PDSCH reception operation corresponding to the received multi-cell DCI. Alternatively, the UE may not expect the condition to be satisfied in all the scheduled cells. That is, the UE may expect that a valid PDSCH is to be allocated in at least a single scheduled cell.

In a case of multi-cell PUSCH scheduling, a PUSCH may not include a TB (or a UL-SCH). The PUSCH that does not include the TB may be allocated to only a single cell at most in a set of co-scheduled cells. A PUSCH (or PUSCH resources) having a UCI mapped thereto may be transmitted. The UCI may include at least CSI (or CSI reporting, beam reporting). The PUSCH not including the TB and/or a PUSCH including the CSI may not be dropped. For example, the UE may not expect that resources of the PUSCH not including the TB and/or the PUSCH including the CSI overlap with downlink symbols (e.g., semi-statically configured downlink symbols) or downlink resources (e.g., SSB resources). In a case where the CSI is multiplexed onto PUSCH repetitive transmissions, the CSI may be multiplexed onto one or two PUSCH(s) (or PUSCH instance(s)). For example, the CSI may be multiplexed onto the earliest PUSCH (or PUSCH instance) transmitted by the UE. In a case where the PUSCH repetition transmissions are performed on the basis of two TCIs or two SRS resource sets, the CSI may be multiplexed onto one PUSCH for each TCI or for each SRS resource set, that is, may be multiplexed onto two PUSCHs in total. Accordingly, CSI transmission performance may be improved by a macro diversity effect.

In a case where a plurality of carriers is configured in a UE, the plurality of carriers may form a plurality of sets of cells. That is, for the UE configured with the plurality of carriers, one or more sets of cells capable of being scheduled simultaneously by a multi-cell DCI may be configured. For example, a first DCI may simultaneously schedule serving cells belonging to a first set of cells, and a second DCI may simultaneously schedule serving cells belonging to a second set of cells. The first DCI and the second DCI may be transmitted in the same DCI format in the same serving cell. In this case, when there is no separate prior information, the UE may have a difficulty in determining which set of cells to which the received DCI has performed scheduling. Accordingly, information indicating a set of cells to be scheduled may be included in the DCI and dynamically transmitted to the UE. The field indicating the set of cells may have a fixed length and may be mapped to a preceding location (e.g., a bit (in a stream) closer to MSB) earlier than fields each having variable length depending on the size of the set of co-scheduled cells within the multi-cell DCI.

According to the exemplary embodiment, a first set of cells and a second set of cells may be distinguished by carrier indicators (e.g., n_CI) different from each other. In addition, a scheduled cell belonging to the first set of cells may not belong to the second set of cells.

As described above, the UE may perform a PDCCH monitoring operation for scheduling a set of cells in a scheduling cell interrelated with the set of cells. To this end, a search space set for monitoring multi-cell DCI formats in the scheduling cell may be configured. The search space set may include PDCCH candidates. For the PDCCH candidates, the UE may perform blind decoding (BD) and perform channel estimation for CCEs to which the PDCCH candidates are mapped. In this case, the number of BDs performed by the UE for multi-cell scheduling and the number of CCEs for channel estimation for the set of cells may be considered to relate to an operation for any one scheduled cell, and the number of BDs and the number of CCEs may be counted for any one scheduled cell described above. According to the exemplary embodiment, a scheduled cell may be referred to as a reference cell. The number of BDs performed by the UE for the multi-cell scheduling and the number of CCEs for the channel estimation may not be counted for scheduled cells that are not reference cells.

A reference cell may be configured in a UE by a base station. For example, a cell with a search space set for multi-cell scheduling may be regarded as a reference cell. In addition, according to the exemplary embodiment, in a case where a cell for scheduling a set of cells matches any one scheduled cell in the set of cells, the matching cell may be regarded as a reference cell. Even when the cell for scheduling the set of cells matches any one scheduled cell in the set of cells, i.e., the first scheduled cell 105, the second scheduled cell 107 may be regarded as a reference cell in a case where the search space set for monitoring a multi-cell DCI is configured in the second scheduled cell 107 different from the first scheduled cell 105. The number of DCI format sizes monitored by the UE for the set of cells may be counted for the reference cell. In a case where the number of DCI format sizes that may be monitored in the reference cell by the UE exceeds an upper limit (e.g., 3 or 4), the sizes of a first DCI format and a second DCI format monitored by the UE may be aligned with each other, and the number of DCI sizes may be reduced.

Meanwhile, in the conventional carrier aggregation technology, a single serving cell may be restricted to be scheduled only in a single scheduling cell. For example, in a case where a certain serving cell is configured to be self-scheduled from itself, the corresponding serving cell may not be configured to be cross-carrier scheduled from other serving cells. In contrast, in a case where a certain serving cell is configured to be cross-carrier scheduled from other serving cells, the corresponding serving cell may not be configured to be self-scheduled from itself. Alternatively, a certain serving cell may not be configured to receive cross-carrier scheduling from two different serving cells simultaneously. In a case where a single serving cell is configured to be scheduled from a plurality of scheduling cells, the UE should perform a PDCCH monitoring operation on the plurality of scheduling cells for the serving cell, and due to this, a PDCCH candidate mapping rule may be complicated when an upper limit of the number of BDs/CCEs performable by the UE for the serving cell is considered. Ultimately, the implementation complexity of the UE may increase. Accordingly, it may be preferable to impose a limit on the number of scheduling cells as described above.

In contrast, the multi-cell scheduling method described above may be used together with the single-cell scheduling method. The first scheduled cell 105 may be scheduled by a multi-cell DCI from the first scheduling cell 103, and the second scheduled cell 107 may be scheduled by a single-cell DCI from the second scheduling cell, the first and second scheduled cells being configured in the UE. According to the exemplary embodiment, the second scheduling cell may be identical to the first scheduling cell. For example, a first scheduling cell, i.e., a single serving cell, may schedule a PDSCH or a PUSCH to the plurality of scheduled cells on the basis of the multi-cell DCI or the single-cell DCI.

According to another exemplary embodiment, the second scheduled cell 107 may be identical to the first scheduled cell 105. The first scheduled cell 105, i.e., the single serving cell, may be scheduled by the multi-cell DCI from the first scheduling cell 103 and, at the same time, may be scheduled by the single-cell DCI from the second scheduling cell. That is, the single serving cell may be configured to be scheduled from two scheduling cells. However, unlike the conventional method described above, in a case where multi-cell scheduling and single-cell scheduling are mixed, the above configuration may be effective in a case where a predetermined condition is satisfied. This will be described in more detail through the exemplary embodiments below.

FIG. 2 is a view illustrating a first exemplary embodiment of a method of scheduling a single serving cell in a plurality of scheduling cells according to the exemplary embodiment of the present disclosure.

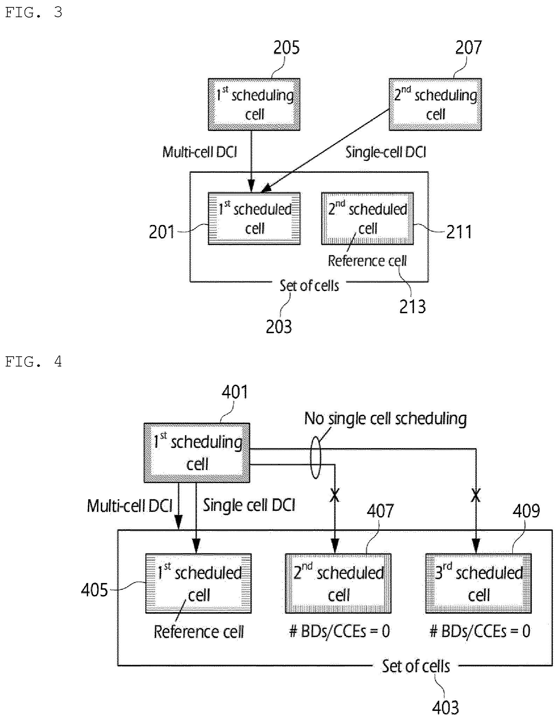

FIG. 3 is a view illustrating a second exemplary embodiment of a method of scheduling a single serving cell in a plurality of scheduling cells according to the exemplary embodiment of the present disclosure.

Referring to FIGS. 2 and 3, a first scheduled cell 201 may belong to a set of cells 203 and may be scheduled by a multi-cell DCI from a first scheduling cell 205. At the same time, the first scheduled cell 201 may be scheduled by a single cell DCI from a second scheduling cell 207.

Referring to FIG. 2, the first scheduled cell 201 may be configured as a reference cell 209 of a set of cells. The reference cell may mean a serving cell where BDs/CCEs for multi-cell DCI monitoring are counted. That is, the number of BDs/CCEs corresponding to the multi-cell DCI monitoring may be counted for the first scheduled cell 201. In this case, both of the number of BDs/CCEs corresponding to the multi-cell DCI monitoring in the first scheduling cell 205 and the number of BDs/CCEs corresponding to the single-cell DCI monitoring in the second scheduling cell 207 may be counted for the first scheduled cell 201. Accordingly, a rule for allocating the PDCCH monitoring capabilities (i.e., the maximum number of BDs/CCEs performable) allowed in the first scheduled cell 201 to the first scheduling cell 205 and the second scheduling cell 207 should be defined, and due to this, the PDCCH monitoring operation of UE becomes complicated.

Accordingly, in a case of a first exemplary embodiment, since the first scheduled cell is the reference cell, the complexity may be reduced by not allowing simultaneous monitoring of the multi-cell DCI and the single-cell DCI to be performed from cells different from each other.

In contrast, referring to FIG. 3, a reference cell 213 of a set of cells 203 may be configured as a second scheduled cell 211. That is, the number of BDs/CCEs corresponding to the multi-cell DCI monitoring in the first scheduling cell 205 may be counted for the second scheduled cell 211, and the number of BDs/CCEs corresponding to the single-cell DCI monitoring in the second scheduling cell 207 may be counted only for the first scheduled cell 201. Accordingly, from the perspective of PDCCH candidate mapping of the first scheduled cell 201 (that is, from the perspective of counting the number of BDs/CCEs) or from the perspective of counting the number of DCI sizes, this configuration is equivalent to a case where the first scheduled cell 201 is scheduled only from the second scheduling cell 207. Therefore, the PDCCH monitoring capability (i.e., the maximum number of BDs/CCEs performable) allowed for the first scheduled cell 201 may be fully performed in the second scheduling cell 207, whereby the UE may perform the PDCCH monitoring operation corresponding to the conventional method for the first scheduled cell 201.

Accordingly, in the present disclosure, in a case where predetermined conditions are satisfied, the UE may perform the PDCCH monitoring operation for scheduling the single serving cell (i.e., the scheduled cell) among a plurality of serving cells (i.e., scheduling cells). The predetermined conditions may include at least one of the conditions listed below: the plurality of serving cells may include the first scheduling cell 205 and the second scheduling cell 207, the first scheduling cell 205 may schedule a PDSCH/PUSCH to a scheduled cell on the basis of the multi-cell DCI, the second scheduling cell 207 may schedule a PDSCH/PUSCH to a scheduled cell on the basis of the single cell DCI, the scheduled cell may be included in the set of cells 203 corresponding to the multi-cell DCI, and the reference cell 213 of the set of cells 203 may be configured as a different scheduled cell other than the scheduled cell.

The conditions described above may correspond to a concept illustrated in the second exemplary embodiment in FIG. 3. Conversely, in a case where a certain scheduled cell is configured as a reference cell for a set of cells to which it belongs, the number of scheduling cells corresponding to the scheduled cell may be limited to a maximum of 1. For example, in a case where the scheduled cell considered as the reference cell receives multi-cell scheduling from a first scheduling cell and receives single-cell scheduling from a second scheduling cell, the first scheduling cell and the second scheduling cell may be the same cell. In the exemplary embodiment, a single scheduled cell may be a secondary cell. In addition, the single scheduled cell may be a primary cell or a primary secondary cell.

That is, in a case where the single serving cell is included in the set of cells corresponding to the multi-cell DCI and the reference cell of the set of cells is configured as the different scheduled cell other than the serving cell, the first scheduled cell is not the reference cell as shown in FIG. 3, so it is possible to reduce scheduling complexity by allowing simultaneous monitoring of the multi-cell DCI and the single-cell DCI to be performed from cells different from each other.

### [PDCCH monitoring operation]

Meanwhile, in a case where carrier aggregation is configured in a UE, the maximum number of BDs/CCEs, which are performable by the UE, for each serving cell (i.e., for each scheduled cell) may be determined on the basis of the capability of the UE. The UE may be configured with a plurality of serving cells (i.e., downlink cells) from a base station. The PDCCH monitoring operation for scheduling of each serving cell may be performed in each interrelated scheduling cell or in a downlink active bandwidth part of each scheduling cell. When µ is an index representing a subcarrier spacing configured in each scheduling cell or a subcarrier spacing of a downlink active bandwidth part of each scheduling cell, the number of serving cells corresponding to the subcarrier spacing setting µ may be expressed as N_{cells}^{µ}. µ may be assigned with values of 0, 1, 2, 3,..., which respectively correspond to subcarrier spacings of 15 kHz, 30 kHz, 60 kHz, 120 kHz,..., and so on. The total number of serving cells configured to in the UE may be expressed as sum_µ{N_{cells}^{µ}}, that is, N_{cells}⁰ + N_{cells}¹ +..., and so on.

The UE may report N_{cap} as PDCCH monitoring capability information to the base station (where N_{cap} is a natural number). According to the exemplary embodiment, in a case where the number of serving cells sum_µ {N_{cells}^{µ}} does not exceed N_{cap}, the UE may perform, for each serving cell, at most M^{max,slot,µ} number of PDCCH blind decoding operations per slot of the corresponding scheduling cell, and may process at most C^{max,slot,µ} number of CCEs. The M^{max,slot,µ} and C^{max,slot,µ} may respectively represent an upper limit of the number of BDs and an upper limit of the number of CCEs for a single serving cell, and may be predefined in the technical specifications. That is, in the above case, the UE may perform the PDCCH monitoring operation corresponding to the full capability for each serving cell.

According to another exemplary embodiment, in a case where sum_µ{N_{cells}^{µ}} number of serving cells exceeds N_{cap}, the UE may appropriately allocate the PDCCH monitoring capability limited by the N_{cap} for each subcarrier spacing. According to the first exemplary embodiment, for the scheduled cell(s) corresponding to the scheduling cell(s) having a subcarrier spacing setting µ, the UE may perform at most "M^{total,slot,µ} = floor(N_{cap} * M^{max,slot,µ} * N_{cells}^{µ} / sum_µ{N_{cells}^{µ}})" number of blind decoding operations and may perform at most "C^{total,slott,µ} = floor(N_{cap} * C^{max,slot,µ} * N_{cells}^{µ} / sum_µ{N_{cells}^{µ}})" number of channel estimation operations for CCEs. In addition, according to the second exemplary embodiment, for each scheduled cell, the UE may perform at most "min(N^{max,slot,µ}, M^{total,slot,µ})" number of blind decoding operations and at most "min(C^{max,slot,µ}, C^{total,slot,µ})" number of CCE reception operations. As a result, the maximum number of BDs/CCEs that the UE may monitor for each serving cell may be less than M^{max,slot,µ} and C^{max,slot,µ}.

According to the exemplary embodiment, in a case where a multi-TRP PDSCH transmission method is used, depending on the number of CORESET pools in each cell and/or whether a CORESET pool is configured or not, N_{cells}^{µ} number of cells may be classified into N_{cells,0}^{µ} number of cell (s) and N_{cells,1}^{µ} number of cell(s) to which a higher PDCCH monitoring capability is applied. In this case, a relationship N_{cells}^{µ} = N_{cells,0}^{µ} + N_{cells,1}^{µ} may be established. When the number of serving cells is counted by using the method described above, the N_{cells,1}^{µ} number of cells may be scaled by applying a multiplication coefficient of γ. For example, sum_µ{N_{cells}^{µ}} may be replaced by sum_µ{N_{cells,0}^{µ} + γ * N_{cells,1}^{µ}}. Similarly, floor (N_{cap} * M^{max,slot,}µ * N_{cells}^{µ} / sum_µ{N_{cells}^{µ}}) and floor(N_{cap} * C^{max,slot,µ} * N_{cells}^{µ} / sum_µ{N_{cells}^{µ}}) may respectively be replaced by floor(N_{cap} * M^{max,slot,µ} * (N_{cells,0}^{µ} + γ * N_{cells,1}^{µ}) / Sum_µ{N_{cells,0}^{µ +} γ * N_{cells,1}^{µ}}) and floor(N_{cap} * C^{max,slot,µ} * (N_{cells,0}^{µ} + γ * N_{cells,1}^{µ}) / sum_µ{N_{cells, 0}^{µ} + γ * N_{cells, 1}^{µ}}) . γ may be a natural number. Alternatively, γ may be a positive integer. For example, γ may be set by the base station to values of 0.5, 1, 1.5, 2, etc., or may be predefined in the technical specifications.

FIG. 4 a view illustrating a second exemplary embodiment of a method of performing single DCI multi-cell scheduling according to the exemplary embodiment of the present disclosure.

Referring to FIG. 4, FIG. 4 illustrates that multi-cell scheduling based on the same configuration as the first exemplary embodiment in FIG. 1 may be performed. That is, the multi-cell scheduling may be performed by a multi-cell DCI for a set of cells 403 including a first scheduled cell 405, a second scheduled cell 407, and a third scheduled cell 409. The set of cells 403 is a downlink set of cells, and the multi-cell scheduling may mean multi-cell PDSCH scheduling. Alternatively, the set of cells 403 may be an uplink set of cells and the multi-cell scheduling may mean multi-cell PUSCH scheduling. Alternatively, the set of cells 403 may mean both of the downlink set of cells and the uplink set of cells. The multi-cell DCI may be monitored in a search space set mapped to a first scheduling cell. The search space set may be configured for the first scheduled cell. That is, the first scheduled cell 405 may perform the role of a reference cell. The first scheduled cell 405 may or may not coincide with the first scheduling cell 401.

According to the exemplary embodiment, the UE may monitor the multi-cell DCI and simultaneously monitor a single-cell scheduling DCI (hereinafter referred to as a single-cell DCI) for each scheduled cell. In the NR communication system, a single-cell scheduling DCI may include DCI formats 1_0, 1_1, 1_2, etc., which are downlink DCIs, and may include DCI formats 0_0, 0_1, 0_2, etc., which are uplink DCIs.

Referring to FIG. 4, for a first scheduled cell 405, the UE may monitor both of the multi-cell DCI and the single-cell DCI. According to the exemplary embodiment, since the first scheduled cell 405 is a reference cell, a multi-cell DCI monitoring operation and a single-cell DCI monitoring operation for the first scheduled cell 405 may be performed only in the same scheduling cell (e.g., the first scheduling cell 401.

In contrast, for each of a second scheduled cell 407 and a third scheduled cell 409, the UE may not monitor the single cell DCI. A base station may not configure a search space set (and a CORESET) for the second scheduled cell 407 and the third scheduled cell 409 in the UE. For example, information on RRC serving cell configurations for each of the second scheduled cell 407 and the third scheduled cell 409 may not include PDCCH configuration parameters (or information elements (IEs)). The PDCCH configuration parameters (or IEs) may include PDCCH configuration parameters for single-cell scheduling and/or PDCCH configuration parameters for multi-cell scheduling. Accordingly, scheduling for the second scheduled cell 407 and the third scheduled cell 409 may only rely on the multi-cell DCI. The UE may not perform operations of PDCCH blind decoding and CCE channel estimation for the single cell DCI with respect to the second scheduled cell 407 and the third scheduled cell 409. That is, the number of BDs/CCEs for the second scheduled cell 407 and the third scheduled cell 409 for the single cell DCI may be 0. In addition, for the single cell DCI, the number of DCI formats that the UE monitors for the second scheduled cell 407 and the third scheduled cell 409 may be 0. Hereinafter, a serving cell (e.g., each of the second scheduled cell 407 and the third scheduled cell 409) may be referred to as a first serving cell.

Through the description described below, a method of performing a PDCCH monitoring operation in each serving cell in a case where carrier aggregation including a first serving cell is applied to a UE is described.

### [First method]

According to the exemplary embodiment, when a subcarrier spacing setting of a cell configured to schedule a first serving cell is µ, an N_{cells}^{µ} value may be calculated by counting the first serving cell once. That is, the first serving cell may increase N_{cells}^{µ} by 1. Simultaneously or separately, a sum_µ{N_{cells}^{µ}} value may be calculated by counting the first serving cell once. That is, the first serving cell may increase sum_µ{N_{cells}^{µ}} by 1.

According to another exemplary embodiment, in a case where a plurality of CORESET pools is configured for a first serving cell, the first serving cell may be counted γ times in a cell count calculation formula (in the first method).

The first method may be interpreted as a method of allocating a PDCCH monitoring capability of the UE to the first serving cell even though there is no PDCCH monitoring operation in which counting is performed for the first serving cell. This method may have drawbacks, which are described in detail below.

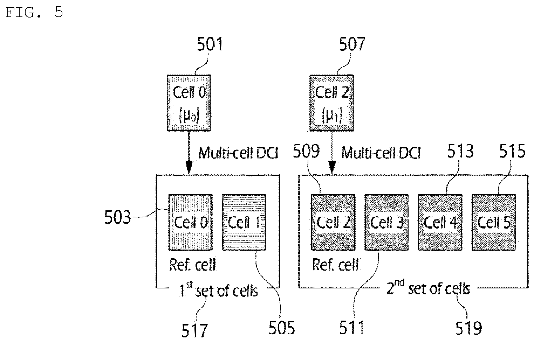

FIG. 5 is a conceptual diagram illustrating a third exemplary embodiment of a method of performing single DCI multi-cell scheduling according to the exemplary embodiment of the present disclosure.

Referring to FIG. 5, six serving cells 503, 505, 509, 511, 513, and 515 may be used for carrier aggregation in a UE. The six serving cells 503, 505, 509, 511, 513, and 515 may be distinguished from each other by indices 0 to 5 (i.e., Cell 0, Cell 1, Cell 2, Cell 3, Cell 4, and Cell 5). In addition, two sets of cells 517 and 519 may be configured for single DCI multi-cell scheduling. A first set of cells 517 may include serving cells 0 and 1, and a second set of cells 519 may include serving cells 2 to 5. A scheduling cell of the first set of cells 517 may be configured as serving cell 0 501, and serving cell 0 may be regarded as a reference cell. In addition, a scheduling cell of the second set of cells 519 may be configured as serving cell 2 507, and serving cell 2 may be considered as a reference cell. Serving cell 0 (i.e., a downlink active bandwidth part of serving cell 0 may follow a subcarrier spacing setting µ₀ (e.g., a subcarrier spacing of 15 kHz), and serving cell 2 (i.e., a downlink active bandwidth part of serving cell 2) may follow a subcarrier spacing setting µ₁ (e.g., a subcarrier spacing of 30 kHz). For example, serving cell 0 may have values given by M^{max,slot,µ0} = 44 and C^{max,slot,µ0} = 56, and serving cell 1 may have values given by M^{max,slot,µ1} = 44 and C^{max,slot,µ1} = 56. In addition, N_{cap} = 2 may be assumed for the UE's PDCCH monitoring capability for carrier aggregation.

Referring to FIG. 5, the single cell scheduling may not be configured in the UE. That is, PDSCH and/or PUSCH scheduling for the six serving cells may only rely on the multi-cell scheduling. The UE may monitor the multi-cell DCI in a search space set configured for serving cell 0 and serving cell 2, and may schedule a PDSCH or a PUSCH for one or more cell(s) constituting a first set of cells and for one or more cell(s) constituting a second set of cells on the basis of the multi-cell DCI.

Referring to FIG. 5, serving cell 1 505 and serving cell 3 to serving cell 5 511 to 515 satisfy conditions of the first serving cell. That is, since the single cell scheduling is not applied to serving cell 1 505 and serving cell 3 to serving cell 5 511 to 515, the UE does not perform a single cell DCI-monitoring operation for the serving cells.

In addition, the multi-cell scheduling may be performed for serving cell 1 505 by serving cell 0 501, but the number of BDs/CCEs and the number of DCI sizes corresponding to a search space set configured for the multi-cell scheduling are counted for serving cell 0, not for serving cells.

In addition, the multi-cell scheduling may be performed for serving cells 3 to 5 by serving cell 2, but the number of BDs/CCEs and the number of DCI sizes corresponding to a search space set configured for the multi-cell scheduling are counted for serving cell 2, not for serving cells.

As a result, the number of BDs/CCEs corresponding to each of serving cell 505 and serving cells 511 to 515 may be 0. In addition, the number of DCI formats corresponding to each of serving cell 505 and serving cells 511 to 515 may be 0.

In the first method, in a case where carrier aggregation including the first serving cell(s) (Cell 1, or Cell 3 to 5) is applied to the UE, an N_{cells}^{µ} value and a sum_µ{N_{cells}^{µ}} value may be increased by 1 (or γ) by each of the serving cells. That is, each of the serving cells may be counted once (or γ times). According to the exemplary embodiment, serving cell 0, which is a scheduling cell of serving cells 0 and 1, follows a subcarrier spacing setting µ₀, so it may be given by N_{cells}^{µ0} = 2. In addition, serving cell 2, which is a scheduling cell of serving cells 2 to 5, follows a subcarrier spacing setting µ₁, so it may be given by N_{cells}^{µ1} = 4. Accordingly, it may be given by sum_µ{N_{cells}^{µ}} = 6. Due to N_{cap} = 2, sum_µ{N_{cells}^{µ}} > N_{cap} is established, so the UE may perform, in total, at most floor (N_{cap} * M^{max,slot,µ0} * N_{cells}^{µ0} / sum_µ{N_{cells}^{µ}}) = floor(2 * 44 * 2/6) = 29 blind decoding operations, and may process at most floor(N_{cap} * C^{max,slot,µ0} * N_{cells}^{µ0} / sum_µ{N_{cells}^{µ}}) = floor (2 * 56 * 2/6) = 37 CCEs. In addition, for each of serving cell 0 and serving cell 1, the UE may process at most min(M^{max,slot,µ0}, M^{total,slot,µ0}) = min (44, 29) = 29 blind decoding operations and at most min(C^{max,slot,µ0}, C^{total,slot,µ0}) = min(56, 37) = 37 CCEs.

As a result, the maximum number of BDs and CCEs that the UE is able to process for serving cell 0 is reduced compared to M^{max,slot,µ0} = 44 and C^{max,slot,µ0} = 56, and due to this, the PDCCH monitoring operation and PDCCH transmission operation in serving cell 0 may be restricted. The above problem may be relatively more severe in a case where serving cell 0 is the primary cell. The UE may skip BD/CCE counting for serving cell 1, and a BD/CCE capability allocated to serving cell 1 by the above calculation formula may be ignored.

### [Second method]

According to another exemplary embodiment, when a subcarrier spacing setting of a cell configured to schedule a first serving cell is µ, an N_{cells}^{µ} value may be a value obtained by counting serving cell(s) excluding the first serving cell among scheduled cell(s) whose subcarrier spacing setting of a scheduling cell is µ. That is, the first serving cell may not be counted in the N_{cells}^{µ} value. Simultaneously or separately, a value of sum_µ{N_{cells}^{µ}} may be a value obtained by counting the serving cell(s) excluding the first serving cell among the scheduled cell(s). That is, the first serving cell may not be counted in the sum_µ{N_{cells}^{µ}} value (in the second method).

The exemplary embodiment illustrated in FIG. 5 may be applied to the second method described above. According to the second method, a value of N_{cells}^{µ} and a value of sum_µ{N_{cells}^{µ}} may be increased by 1 (or γ) by serving cell 0 501 and serving cell 2 507. That is, each of the above serving cells may be counted once (or γ times). In contrast, serving cell 1 505 and serving cell 3 to serving cell 5 511 to 515 may not be counted. According to the second method, only serving cell 0 may be regarded as a scheduled cell for the subcarrier spacing setting µ₀, and a corresponding N_{cells}^{µ0} value may be 1. In addition, only serving cell 2 may be regarded as a scheduled cell for the subcarrier spacing setting µ₁, and a corresponding N_{cells}^{µ1} value may be 1.

Accordingly, it may be given by sum_µ{N_{cells}^{µ}} = 2. In this case, since sum_µ{N_{cells}^{µ}} = N_{cap}, the maximum number of BDs and the maximum number of CCEs for serving cell 0 may respectively be determined as M^{max,slot,µ0} = 44 and C^{max,slot,µ0} = 56.

As a result, it may be identified that the maximum number of BDs and CCEs processable by the UE for serving cell 0 is not limited. That is, the drawbacks of the first method may be overcome by applying the second method.

The second method may be interpreted as a method of not allocating the total number of BDs/CCEs processable by the UE per unit time (e.g., one slot) to the first serving cells (Cell 1 505, and Cell 3 to Cell 5 511 to 515). For the purpose of determining the number of BDs/CCEs per cell, the UE may exclude (i.e., not count) the first serving cells when counting the total number of carriers (e.g., the total number of carriers per subcarrier spacing). An upper limit of the number of BDs/CCEs per serving cell determined finally may have the same value as a value obtained when the first serving cells are not configured in the UE.

As a result, BD/CCE capabilities that the UE is able to perform in serving cells other than the first serving cells, i.e., the upper limit of the number of BDs/CCEs, may increase compared to the result of applying the first method.

As described above, the predetermined condition for applying the above exemplary embodiment may include at least one of conditions including: a condition that a search space set (e.g., PDCCH configuration IE and search space set configuration IE) for a first serving cell (or scheduling of the first serving cell) is not configured; a condition that the number of BDs for the first serving cell is 0; a condition that the number of CCEs for the first serving cell is 0; and a condition that the number of DCI format sizes monitored in the first serving cell is 0.

A first serving cell should be any one scheduled cell belonging to a set of cells and should not be a cell configured as a reference cell. In a case where the above condition is satisfied, an arbitrary cell that is not the reference cell among the scheduled cells belonging to the set of cells may be regarded as the first serving cell. The first serving cell may be a cell from which the UE transmits a PUCCH. For example, HARQ-ACK(s) of PDSCH(s) scheduled to the set of cells to which the first serving cell belongs may be transmitted from the first serving cell. The HARQ-ACKs of the PDSCHs scheduled by the same multi-cell DCI may be transmitted on the same PUCCH resources.

According to the exemplary embodiment, search space sets monitored by the UE in a scheduling cell configured to perform multi-cell scheduling may form a search space set group (SSSG). A plurality of SSSGs may be configured in a first scheduling cell, and each of search space sets configured to monitor a multi-cell DCI may be included in any one SSSG. The plurality of SSSGs may be configured in the first scheduling cell, and each of search space sets configured to monitor the multi-cell DCI may be included in any one SSSG.

In addition, the UE may be indicated by the base station to perform an SSSG switching operation, and based on the above indication, the UE may not perform a search space set monitoring operation for a multi-cell DCI for a predetermined period of time. The predetermined period of time may include a period during which an SSSG to which a search space set does not belong is monitored. A timer for the SSSG may operate during the period of monitoring. When the timer expires, the UE may perform the switching operation to a preset SSSG or a default SSSG. In addition, the UE may be dynamically indicated by the base station to perform a PDCCH monitoring skipping operation. During a PDCCH monitoring skipping period, the UE may skip the PDCCH monitoring operation for a search space set configured to monitor the multi-cell DCI. The SSSG switching operation or the PDCCH monitoring skipping operation may be indicated by a group common DCI (e.g., DCI format 2_0) or a scheduling DCI. In addition, the SSSG switching operation or the PDCCH monitoring skipping operation may be indicated by the multi-cell DCI. That is, the multi-cell DCI may include SSSG switching indication information and/or PDCCH monitoring skipping indication information. The SSSG switching operation or the PDCCH monitoring skipping operation may be applied to a scheduling cell and may operate independently of scheduled cell(s).

### [HARQ-ACK feedback method]

The UE may perform feedback of a HARQ-ACK, which is a reception response of a PDSCH scheduled by a multi-cell DCI, to the base station, and the base station may determine whether or not to retransmit the PDSCH of a corresponding TB on the basis of the feedback. In a case where the UE successfully receives the PDSCH (or the corresponding TB), HARQ-ACK information corresponding to the relevant TB may be ACK. In contrast, in a case where the UE does not successfully receive the PDSCH (or the corresponding TB), the HARQ-ACK information corresponding to the relevant TB may be negative ACK (NACK). The HARQ-ACK information may include only ACK or only NACK. Alternatively, the HARQ-ACK information may include ACK or NACK. The HARQ-ACK information corresponding to each downlink TB may be 1 bit.

in a case where a HARQ transmission method based on code block group (CBG) is used, a single TB may be configured with N number of CBG(s), and N bits of HARQ-ACK information may correspond to each downlink TB (where N is a natural number).

According to the exemplary embodiment, HARQ-ACK information included in a HARQ-ACK codebook may be reported to the base station. There are several types of HARQ-ACK codebooks, including: a HARQ-ACK codebook with a semi-static codebook size (hereinafter referred to as a "Type 1 HARQ-ACK codebook"); a HARQ-ACK codebook with a dynamically variable codebook size (hereinafter referred to as a "Type 2 HARQ-ACK codebook"); and a HARQ-ACK codebook for feeding back HARQ-ACKs for a plurality of downlink HARQ processes at once (hereinafter referred to as a "Type 3 HARQ-ACK codebook"). Respective downlink HARQ-ACKs may be mapped to respective bits constituting a payload of a HARQ-ACK codebook. The HARQ-ACK codebook may be transmitted to the base station via an uplink signal or channel (e.g., a PUCCH, a PUSCH, an SRS, etc.).

According to the exemplary embodiment, the UE may monitor a multi-cell DCI format and a single-cell DCI format simultaneously (or both). A serving cell in which the UE monitors the multi-cell DCI format and a serving cell in which the UE monitors the single-cell DCI format may be identical or different, and the serving cells may belong to the same PUCCH group (or PUCCH cell group). That is, HARQ-ACKs of PDSCH (s) scheduled by the multi-cell DCI format and HARQ-ACKs of PDSCH(s) scheduled by the single-cell DCI format may be reported to the base station through the same serving cell (e.g., a PUCCH cell). The UE may be scheduled with a PDSCH (or PDSCH repetitive transmission) on a single serving cell by the single cell DCI. In addition, the UE may be scheduled with PDSCHs (or PDSCH repetitive transmissions) on one or more serving cell(s) by the multi-cell DCI. The number of TBs included in each PDSCH may be determined on the basis of a transmission operation in each serving cell. For example, a PDSCH scheduled with a number of multiple-input multiple output (MIMO) transmission layers less than or equal to a reference value may include a single TB, and a PDSCH scheduled with a number of MIMO transmission layers greater than or equal to the reference value may include two TBs.

According to the exemplary embodiment, the UE may report a PDSCH HARQ-ACK to the base station on the basis of a Type 2 HARQ-ACK codebook. In this case, HARQ-ACKs of all PDSCHs simultaneously scheduled by a multi-cell DCI may be included in the same HARQ-ACK codebook. For example, a HARQ-ACK of a PDSCH scheduled to a first scheduled cell and a HARQ-ACK of a PDSCH scheduled to a second scheduled cell may be included in the same Type 2 HARQ-ACK codebook, and may be transmitted to the base station through the same PUCCH resources (e.g., the same PUCCH resources of the same serving cell). Below, more specific methods are described.

### [First method]

In the first method, both a HARQ-ACK of a PDSCH scheduled by a multi-cell DCI and a HARQ-ACK of a PDSCH scheduled by a single-cell DCI may be included in one type 2 HARQ-ACK codebook. Regardless of DCI formats used for scheduling, a UE may include all downlink HARQ-ACKs having the same transmission timing (e.g., transmission slots, transmission subslots, etc.) in the same codebook, and may report the codebook to a base station at transmission timing. In addition, integrated counting of a downlink assignment index (DAI) may be performed for both a multi-cell DCI and a single-cell DCI. Each DCI may occupy a fixed number (e.g., C) of bit(s) in the Type 2 HARQ-ACK codebook. A C value may be determined as the maximum number of TBs that may be scheduled by a single DCI transmission. For example, in a second exemplary embodiment, the multi-cell DCI may simultaneously schedule up to three cells. Assuming that a PDSCH in each scheduled cell includes a single TB, the UE may be scheduled with up to three TBs in one scheduling. Accordingly, it may be determined as C = 3. In a case where the number of TBs actually scheduled by the DCI is less than C, HARQ-ACKs corresponding to the TBs may be mapped to some of C bits, and the remaining bit(s) may be set as a predefined value (e.g., 0 or 1, ACK or NACK).

### [Second method]

In a second method, a plurality of sub-codebooks may be defined for a type 2 HARQ-ACK codebook. The plurality of sub-codebooks may include a first sub-codebook and a second sub-codebook. DAI may be operated (i.e., counted) individually for each sub-codebook. A UE may map HARQ-ACK(s) corresponding to respective DCIs to one of the first sub-codebook and the second sub-codebook according to the number of serving cells scheduled by the single DCI. In a case of single-cell PDSCH scheduling, i.e., a case where a PDSCH is scheduled only to a single serving cell by DCI, corresponding HARQ-ACK(s) may be mapped to the first sub-codebook. In contrast, in a case of multi-cell PDSCH scheduling, i.e., in a case where PDSCHs are respectively scheduled for two or more cells by a multi-cell DCI format, corresponding HARQ-ACKs may be mapped to the second sub-codebook.

The number of bits of a HARQ-ACK codebook payload allocated to each DCI may be fixed regardless of the number of HARQ-ACK(s) corresponding to respective DCIs. In this case, the number of bits may be set to values different from each other between the first sub-codebook and the second sub-codebook. C1 number of bit(s) may be allocated for each DCI corresponding to the first sub-codebook, and C2 number of bit(s) may be allocated for each DCI corresponding to the second sub-codebook. According to the exemplary embodiment, since the first sub-codebook aggregates the HARQ-ACKs for the single cell scheduling, the number of TBs that may be scheduled by each DCI transmission may be at most 2. Accordingly, a C1 value may be determined as 1 or 2. In this case, the same C1 value may be applied to both of a single-cell DCI format and a multi-cell DCI format. That is, the single-cell PDSCH scheduling by the single-cell DCI format and the single-cell PDSCH scheduling by the multi-cell DCI format may each occupy the C1 number of bit(s) in the first sub-codebook.

In the exemplary embodiment, it may be given by C1 = 2. That is, in at least any one scheduled cell, the UE may be configured to receive up to two TBs through one PDSCH. In this case, two bits in the first sub-codebook may be allocated for HARQ-ACK(s) of PDSCH(s) scheduled by the single-cell DCI, and the HARQ-ACK(s) may be mapped to at least one of the two bits. In addition, two bits in the first sub-codebook may also be allocated for HARQ-ACK(s) of PDSCH(s) scheduled to a single serving cell by the multi-cell DCI, and the HARQ-ACK(s) may be mapped to at least one of the two bits.

In contrast, since the second sub-codebook collects HARQ-ACKs for multi-cell scheduling, a C2 value may be determined as the maximum number of TBs that may be scheduled once by a multi-cell DCI. For example, in a case where a set of cells includes a first serving cell and a second serving cell and the UE may be scheduled with at most a single TB through one PDSCH in the first serving cell and at most two TBs through one PDSCH in the second serving cell, the C2 value may be determined as 3 (= 1 + 2), which is the maximum number of TBs that may be scheduled simultaneously.

In general, C2 may have a larger value than C1. Regardless of the number of TBs actually scheduled by DCIs, C1 and C2 may be applied statically to all the DCIs within each sub-codebook. In this case, in a case where a multi-cell DCI schedules a single serving cell, HARQ-ACK(s) corresponding thereto may be transmitted while being included in the first sub-codebook, and the size of a HARQ-ACK codebook payload occupied by each DCI may be reduced from C2 to C1. Accordingly, UCI overhead may be reduced.

According to the exemplary embodiment, a PDSCH scheduled to a UE may be dropped. Accordingly, the number of serving cells scheduled by DCIs and the number of serving cells on which the UE actually performs the PDSCH reception operation may not match. For example, a PDSCH may be scheduled to each of two serving cells by a multi-cell DCI, and the UE may perform the PDSCH reception operation on only one of the two serving cells. That is, the number of cells scheduled by the DCI is 2, whereas the number of cells from which the UE actually receives the PDSCH may be 1. Alternatively, all PDSCHs scheduled by the DCI may be dropped, and the number of cells from which the UE actually receives the PDSCH may be 0. In this case, the UE may determine sub-codebooks to which the DCI is mapped on the basis of the nominal number of cells scheduled by the DCI rather than the number of cells on which the UE by itself actually performs the reception operation. For example, since the DCI schedules two serving cells regardless of the number of cells from which the UE actually receives the PDSCH, HARQ-ACKs corresponding to the DCI may be mapped to the second sub-codebook.

### [Third method]

As a third method, a method may be considered in which a plurality of sub-codebooks described above is used, but HARQ-ACK(s) corresponding to respective DCIs are classified into one of a first sub-codebook and a second sub-codebook depending on the formats of the received DCIs. That is, a HARQ-ACK of a PDSCH scheduled by a single-cell DCI format may be included in the first sub-codebook, and a HARQ-ACK of a PDSCH scheduled by the multi-cell DCI format may be included in the second sub-codebook.

According to the third method, the HARQ-ACKs corresponding to the multi-cell DCI may always be included in the second sub-codebook regardless of the number of cells scheduled by the multi-cell DCI, that is, regardless of the size of the scheduled set of cells.

The UE may generate the first sub-codebook and the second sub-codebook according to the above-described rules, and may form a type 2 HARQ-ACK codebook by concatenating the first sub-codebook and the second sub-codebook. Each sub-codebook may also be composed in the same way as the Type 2 HARQ-ACK codebook. As a result, the first sub-codebook and the second sub-codebook may be transmitted through the same uplink resources (e.g., a PUCCH, a PUSCH, etc.).

At any time point of HARQ-ACK feedback, all HARQ-ACKs may be mapped to the first sub-codebook according to the above-described criteria, or all HARQ-ACKs may be mapped to the second sub-codebook according to the above-described criteria. In this case, the Type 2 HARQ-ACK codebook may include only one sub-codebook among the first sub-codebook and the second sub-codebook. In addition, a transmission point of time (e.g., a transmission slot) of the Type 2 HARQ-ACK codebook may coincide with a transmission point of time (e.g., a transmission slot) of a HARQ-ACK for a SPS PDSCH. In this case, the first sub-codebook and/or the second sub-codebook may constitute the Type 2 HARQ-ACK codebook together with the HARQ-ACK(s) for the SPS PDSCH. A bit position to which a HARQ-ACK of SPS PDSCH is mapped may be determined by a predefined rule. For example, in the second HARQ-ACK codebook, the first sub-codebook and/or the second sub-codebook may be mapped first, and then the HARQ-ACK of the SPS PDSCH may be mapped.

According to the exemplary embodiment, the same may be applied even in a case where a plurality of sets of cells is configured in the UE. For example, the UE may perform a HARQ-ACK feedback operation on the basis of the two sub-codebooks described above regardless of the number of configured sets of cells. According to the second method described above, in a case where a multi-cell DCI schedules two or more cells regardless of the set of cells scheduled by the multi-cell DCI, the HARQ-ACKs of PDSCHs scheduled by the multi-cell DCI may be mapped to a second sub-codebook. In addition, according to the third method, in a case where PDSCH(s) are scheduled by the multi-cell DCI format regardless of the sets of cells scheduled by the multi-cell DCI, the HARQ-ACKs of the PDSCH(s) may be mapped to the second sub-codebook. The plurality of sets of cells may belong to the same PUCCH group (i.e., a set of downlink cells having the same PUCCH transmission cell).

Similarly, a C2 value may be determined as the maximum number of TBs that may be scheduled once by a multi-cell DCI. For example, when the maximum number of TBs that may be simultaneously scheduled by a multi-cell DCI in a first set of cells is C21 and the maximum number of TBs that may be simultaneously scheduled by a multi-cell DCI in a second set of cells is C22, a C2 value may be determined as max(C21, C22). Regardless of the sets of cells scheduled by the multi-cell DCI, the UE may map HARQ-ACKs of downlink TBs scheduled by respective multi-cell DCIs to the C2 number of bits (or part of the C2 number of bits) of the second sub-codebook. In this case, integrated counting for DAIs may be performed for the plurality of sets of cells. That is, the DAIs may be information for indicating, to the UE, the number and indexes of the multi-cell scheduling DCIs (or the multi-cell DCI formats) transmitted to the UE for all sets of cells configured in the UE.

According to another example, the number of bits of a second sub-codebook occupied by a multi-cell DCI (i.e., the corresponding HARQ-ACK(s)) may be determined by a set of cells scheduled by the multi-cell DCI. When the maximum number of TBs that may be simultaneously scheduled by a multi-cell DCI in a first set of cells is C21 and the maximum number of TBs that may be simultaneously scheduled by a multi-cell DCI in a second set of cells is C22, the UE may perform mapping HARQ-ACKs of downlink TBs scheduled by the multi-cell scheduling DCI (or the multi-cell DCI format) for scheduling the first set of cells to C21 number of bits (or a part of C21 number of bits) of a first sub-codebook, and perform mapping HARQ-ACKs of downlink TBs scheduled by the multi-cell scheduling DCI (or the multi-cell DCI format) for scheduling the second set of cells to C22 number bits (or a part of C22 number of bits) of the second sub-codebook. In this case, the DAIs may be counted within each set of cells for each set of cells. That is, the DAIs may be information for indicating, to the UE, the number and indexes of the multi-cell scheduling DCI (or the multi-cell DCI format) transmitted to the UE for each set of cells configured in the UE.

### [Fourth method]

According to the fourth method, HARQ-ACKs corresponding to a multi-cell scheduling DCI (or a multi-cell DCI format) for scheduling different sets of cells may be mapped to sub-codebooks different from each other. For example, HARQ-ACKs of TBs scheduled for a first set of cells may be mapped to a second sub-codebook, and HARQ-ACKs of TBs scheduled for a second set of cells may be mapped to a third sub-codebook. The first sub-codebook may still include HARQ-ACK(s) of TB(s) scheduled by a single-cell scheduling DCI (or a single cell DCI format). The UE may perform mapping HARQ-ACKs of downlink TBs scheduled by the multi-cell scheduling DCI (or the multi-cell DCI format) for scheduling the first set of cells to C21 number of bits (or a part of C21 number of bits) of the second sub-codebook, and perform mapping HARQ-ACKs of downlink TBs scheduled by the multi-cell scheduling DCI (or the multi-cell DCI format) for scheduling the second set of cells to C22 number of bits (or a part of C22 number of bits) of a third sub-codebook. Similarly, downlink assignment indexes (DAIs) may be counted within each set of cells for each set of cells.

As described above, according to the exemplary embodiment, the number of FDRA fields included in a multi-cell DCI may be fixed to the same number as the size of a set of cells. Alternatively, in a case where there is one FDRA field in a multi-cell DCI and the one FDRA field is composed of a plurality of blocks, the number of blocks may be fixed to the same number as the size of a set of cells. In addition, the number of field(s) (or the corresponding block(s)) indicating other scheduling information (e.g., a modulation and coding scheme (MCS), a new data indicator (NDI), a redundancy version (RV), a HARQ process number, etc.) may be fixed to the same number as the size of the set of cells. In this case, whether a scheduled cell belonging to the set of cells is scheduled or not may be indicated by a field value of a field corresponding to the scheduled cell. For example, in a case where a certain FDRA field (or a corresponding block within the FDRA field) of a multi-cell DCI is set as a specific code point, the UE may consider that a cell corresponding to the FDRA field (or the corresponding block within the FDRA field) as not being scheduled by the multi-cell DCI. In this case, other field(s) corresponding to the unscheduled cell (e.g., other field(s) indicating an MCS, an NDI, an RV, a HARQ process number, etc.) may be used for other purposes. For example, a certain field may be used to indicate a dormancy/non-dormancy operation state of secondary cell(s) (SCell(s)) configured in the UE. The UE may skip all transmission and reception operations except for a specific operations (e.g., a downlink measurement operation) in an SCell indicated to perform a dormancy operation by the multi-cell DCI. The UE may perform a bandwidth part switching operation in the SCell that is indicated to perform the dormancy operation. For example, the UE may switch to a dormant bandwidth part and activate the dormant bandwidth part. In the dormant bandwidth part, the UE may skip a PDCCH monitoring operation.

According to the exemplary embodiment, in multi-cell scheduling, the number of scheduled cells that are not scheduled by a multi-cell DCI may be 2 or more. For example, a first scheduled cell may be scheduled by the multi-cell DCI, and a second scheduled cell and a third scheduled cell may not be scheduled. In this case, an FDRA field corresponding to the first scheduled cell may indicate frequency domain resource allocation information of a PDSCH scheduled to the first scheduled cell. In contrast, FDRA fields corresponding to the second scheduled cell and the third scheduled cell may be set as a specific code point (e.g., a bit stream with all bits set to 0, a bit stream with all bits set to 1, etc.). In this case, other field(s) corresponding to the second scheduled cell and the third scheduled cell (e.g., other field(s) indicating an MCS, an NDI, an RV, a HARQ process number, etc.) may not be used for use of PDSCH scheduling. Other field(s) corresponding to the second scheduled cell and third scheduled cell may be used for other use. For example, a base station may use the above field(s) to indicate a UE to operate an SCell in a dormancy or non-dormancy state. In addition, according to the exemplary embodiment, a multi-cell DCI may not schedule a PDSCH or a PUSCH to any serving cell belonging to a set of cells. In this case, all FDRA fields (or all blocks of a FDRA field) of the multi-cell DCI may be set to specific code points (e.g., bit streams with all bits set to 0, bit streams with all bits set to 1, etc.). All the FDRA field(s) of the multi-cell DCI may be used for the use described above.

More specifically, according to the exemplary embodiment, the SCell dormancy/non-dormancy operation state may be indicated only by field(s) corresponding to any one of the plurality of unscheduled cells. That is, any one cell may be determined on the basis of a serving cell index. For example, field(s) corresponding to a cell having the smallest (or largest) serving cell index among unscheduled cell (s) may be used for SCell dormancy indication. In addition, field(s) corresponding to a cell having the largest serving cell index among the unscheduled cell(s) may be used for the SCell dormancy indication.

According to another exemplary embodiment, any one of the above-described cells may be determined by other priority rules not based on serving cell indexes. Other priority rules may be set by a base station to a UE or may be predefined in the technical specifications.

According to a yet another exemplary embodiment, any one of the cells described above may be indicated by a base station to a UE. For example, the field(s) used for the SCell dormancy indication may be determined on the basis of another field (or other information) included in a multi-cell DCI. For example, another field might be an FDRA field. The UE may regard a serving cell corresponding to the FDRA field (or a block of the FDRA field) as any one cell in a case where bits of a certain FDRA field (or a certain block of the FDRA field) are all 0 or all 1. In a case where there are two or more serving cells in which the bits of the corresponding FDRA field (or any corresponding block of the FDRA field) are all 0 or all 1, a single serving cell among a plurality of serving cells may be determined as any one cell by the above-described rules or by the configuration from the base station.

According to the exemplary embodiment, priorities between serving cells may be determined on the basis of whether a serving cell is configured as a reference cell or not. For example, the serving cell configured as the reference cell may be given a higher (or lower) priority than other serving cells.

Among fields constituting a multi-cell DCI format, at least one of an MCS field, an NDI field, a RV field, a HARQ process number field, an antenna port indication field, or a field indicating information about a DM-RS sequence, which are corresponding to any one determined cell, may be used to indicate a dormancy or non-dormancy operation of a SCell configured in the UE. SCell dormancy indication may be performed in units of SCell group. A multi-cell DCI may include SCell dormancy/non-dormancy indication information for each of one or more SCell group(s), and the SCell dormancy/non-dormancy indication information may be mapped to a bit stream that is composed by at least one of field(s) and transmitted to the UE.

In this case, a PDSCH may be allocated to serving cell(s) other than any one of the cells belonging to a set of cells by the multi-cell DCI. The base station may schedule the PDSCH to a first serving cell on the basis of a single multi-cell DCI while simultaneously indicating an SCell dormancy/non-dormancy operation to a second serving cell. The first serving cell may be any one cell belonging to the set of cells scheduled by the multi-cell DCI, and the second serving cell may or may not belong to the set of cells. In this case, in a case where the indication information for the second serving cell is information indicating a dormancy operation, the first serving cell may be a cell different from the second serving cell. That is, the UE may not expect to be indicated to enter/maintain a certain serving cell in a dormancy state through a single multi-cell DCI while simultaneously being scheduled to receive the PDSCH or transmit the PUSCH in the serving cell. When the first serving cell and the second serving cell are identical, the dormancy instruction and the scheduling instruction for the same serving cells may conflict, and this may be regarded as an error. In addition, this case may be applied to a case where it is regarded as that a bit stream in which fields of the multi-cell DCI are defined is not actually mapped with information corresponding the fields, and also to a case where the bit stream is withheld or reserved.

According to a first exemplary embodiment, an SCell dormancy/non-dormancy operation may be applied only when a multi-cell DCI satisfies specific conditions. For example, in a case where the multi-cell DCI schedules only a specific single cell, the SCell dormancy/non-dormancy operation may be indicated by the multi-cell DCI. The specific single cell may be a cell (i.e., a scheduling cell) through which the multi-cell DCI is transmitted. Simultaneously or separately, the specific single cell may be a PCell (or a PSCell). That is, in a case where a set of cells includes the PCell, the PCell performs multi-cell scheduling on the set of cells, and only the PCell is scheduled by the multi-cell DCI, the SCell dormancy/non-dormancy indication method may be used by the multi-cell DCI.

Alternatively, according a second exemplary embodiment, a specific single cell included in a set of cells may be a reference cell. In addition, a UE may expect to receive a multi-cell DCI including SCell dormancy indication information by the above-described method only when a serving cell to which the multi-cell DCI is transmitted belongs to a DRX active time, and may perform a corresponding PDCCH monitoring operation and an SCell dormancy/non-dormancy transition/maintenance operation.

According to a third exemplary embodiment, in a case where a scheduled cell indicator is present in a multi-cell DCI, an SCell dormancy/non-dormancy operation may be indicated by the multi-cell DCI. However, when scheduled cell(s) are indicated by the scheduled cell indicator, the number of FDRA fields or blocks may be variable, and the above-described method may be difficult to apply. The above-described SCell dormancy/non-dormancy indication method using the multi-cell DCI may be used in a limited manner in a case where the scheduled cell indicator does not exist in the multi-cell DCI.

According to a fourth exemplary embodiment, in a case where a multi-cell DCI schedules all cells except any one cell among cells constituting a set of cells, an SCell dormancy/non-dormancy operation may be indicated by the multi-cell DCI.

According to a fifth exemplary embodiment, in a case where a CRC of a multi-cell DCI is scrambled with a specific RNTI, an SCell dormancy/non-dormancy operation may be used. For example, the specific RNTI may be a C-RNTI. In a case where the multi-cell DCI is scrambled with a different RNTI, e.g., a CS-RNTI, other than the C-RNTI, a UE may expect the multi-cell DCI to include a separate field for SCell dormancy indication, or not include SCell dormancy indication information.

The maximum number of MIMO layers that may be transmitted in a serving cell may be set to a value greater than or equal to a reference value. For example, the reference value may be 5. In this case, a PDSCH (or a PUSCH) transmitted from the serving cell may include up to X number of TBs. According to the exemplary embodiment, it may be given by X = 2. The serving cell may be included in a set of cells for multi-cell scheduling. In this case, a multi-cell DCI may include at least a part of scheduling information for the serving cell, for example, an MCS field, an NDI field, an RV field, a HARQ process number field, etc., up to the maximum number of TBs, that is, X. The maximum number of TBs may be set to values different from each other among serving cells belonging to the set of cells. For example, a first serving cell and a second serving cell belonging to the set of cells may respectively correspond to X = 1 and X = 2. At this time, in a case where a serving cell corresponding to X > 1 by a certain multi-cell DCI is not scheduled and an SCell dormancy/non-dormancy operation is indicated through field(s) corresponding to the serving cell by the above-described method, SCell dormancy/non-dormancy indication information may be mapped to bits (a bit stream) corresponding to a specific TB (e.g., a first TB) of the field(s). In addition, according to the exemplary embodiment, the SCell dormancy/non-dormancy indication information may be mapped to bit streams corresponding to one or more TB(s) in the field(s).

In a case where there are two or more cells that are not scheduled by a multi-cell DCI in a certain set of cells, fields corresponding to a plurality of unscheduled cells may be used for uses different from each other. For example, an MCS field, an NDI field, an RV field, a HARQ process number field, an antenna port indication field, and a field indicating information about a DM-RS sequence corresponding to a first serving cell, which is a unscheduled cell, may be used for first use, and at the same time, an MCS field, an NDI field, an RV field, a HARQ process number field, an antenna port indication field, and a field indicating information about a DM-RS sequence corresponding to a second serving cell, which is a unscheduled cell, may be used for second use. The first use may be one of the following uses: SCell dormancy indication, transmission configuration indicator (TCI) indication (or, quasi co-location (QCL) information indication), channel state information (CSI) reporting triggering, sounding reference signal (SRS) transmission triggering, etc., and the second use may be one of the above-described uses other than the first use.

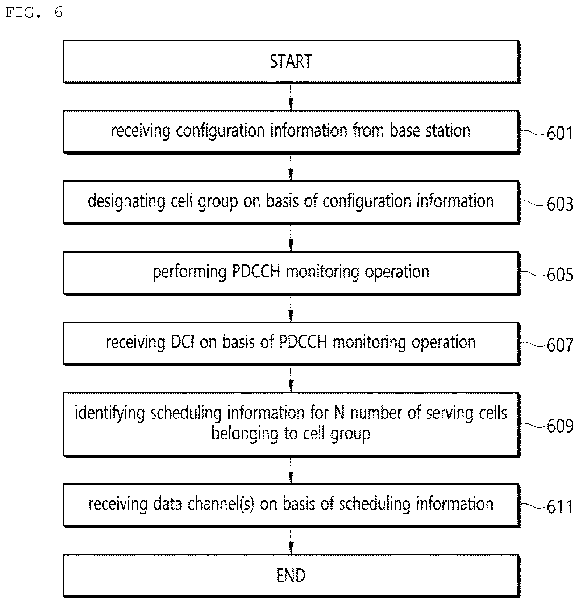

FIG. 6 is a view illustrating a method of operating a UE according to the exemplary embodiment of the present disclosure.

Referring to FIG. 6, in step 601, the UE may receive configuration information from a base station (BS).

In step 603, the UE may designate a plurality of serving cells including a first serving cell and a second serving cell as a cell group on the basis of the configuration information.

In step 605, the UE may perform a PDCCH monitoring operation for receiving a downlink control information (DCI) to schedule the cell group in a search space set of a physical downlink control channel (PDCCH).

According to the exemplary embodiment, the PDCCH monitoring operation includes PDCCH blind decoding operations performing L times, and the PDCCH blind decoding operations performing L times may be counted only for scheduling of the first serving cell (where N and L are positive integers).

In addition, according to the exemplary embodiment, the PDCCH blind decoding operation performing L times may count the number of PDCCH blind decodings for scheduling the second serving cell as 0, and the second serving cell may be excluded from counting the number (#) of scheduled cells.

According to the exemplary embodiment, at least one piece of the configuration information of the PDCCH search space set is configured in the first serving cell, and the PDCCH search space set for only the second serving cell may not be configured in the UE.

According to the exemplary embodiment, the total number of PDCCH blind decodings performed by the UE for scheduling the first serving cell is determined by the number of scheduled cells, and the number of scheduled cells may be counted for each subcarrier spacing of the scheduling cells.

In step 607, the UE may receive a DCI from the base station on the basis of the PDCCH monitoring operation.

According to the exemplary embodiment, the DCI is received from a third serving cell belonging to the base station, and the third serving cell may not be the second serving cell.

According to the exemplary embodiment, each of serving cells scheduled by the DCI therefor is indicated by a first field of the DCI, and a time domain resource allocation field of the DCI may include information indicating an entry in a radio resource control (RRC) configuration table for each of the scheduled serving cells. In addition, the number of information blocks constituting a second field of the DCI may be determined by the number of scheduled serving cells.

According to the exemplary embodiment, the first field may be mapped to a fixed location within a payload of the DCI.

According to the exemplary embodiment, a PDCCH monitoring skipping period is indicated to the UE on the basis of the DCI, and a PDCCH search space set in the indicated skipping period may not be monitored by the UE.

In step 609, the UE may identify scheduling information for N number of serving cells belonging to a cell group.

In step 611, the UE may receive data channel(s) from at least one or more of the N number of serving cell(s) on the basis of the scheduling information.

According to the exemplary embodiment, in a case where at least one of information block(s) constituting a frequency domain resource allocation field is configured as a specific code point, the UE may perform an operation for identifying at least one or more of serving cell(s) corresponding to the at least one or more of the information block(s) as not being scheduled by a DCI.

According to the exemplary embodiment, the frequency domain resource allocation field is included in the DCI, and at least one of serving cell(s) may be included in a cell group.

According to the exemplary embodiment, whether to activate or not a dormant bandwidth part in a secondary cell configured in the UE on the basis of a field group corresponding to a serving cell having the lowest serving cell index among at least one of serving cell(s) identified as not being scheduled is indicated to the UE, and the field group may be included in the DCI.

According to the exemplary embodiment, the secondary cell may not be included in the N number of serving cell(s).

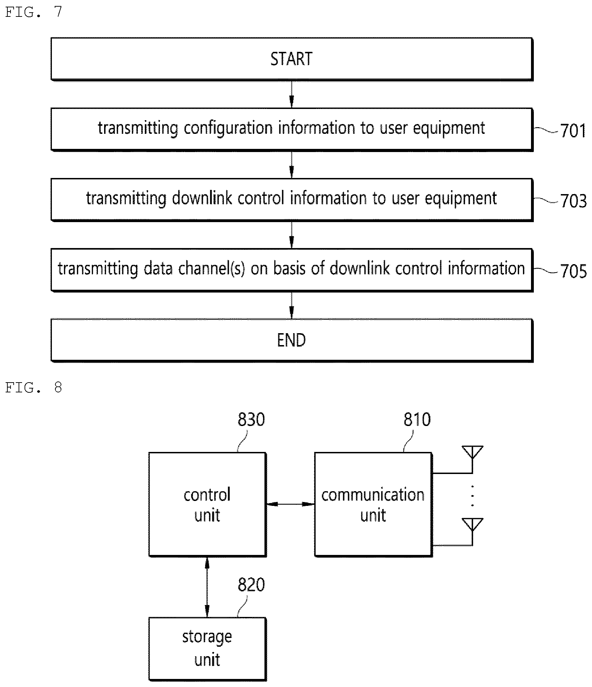

FIG. 7 is a view illustrating a method of operating a base station according to the exemplary embodiment of the present disclosure.

Referring to FIG. 7, in step 701, a base station may transmit configuration information to a user equipment (UE). According to the exemplary embodiment, the base station may include a plurality of serving cells, including a first serving cell and a second serving cell.

In step 703, the base station may transmit a downlink control information (DCI) to the UE.

According to the exemplary embodiment, the DCI is transmitted from a third serving cell belonging to the base station, and the third serving cell may not be the second serving cell.

According to the exemplary embodiment, each of the serving cells scheduled by a DCI therefor may be indicated by a first field of the DCI.

In addition, according to the exemplary embodiment, a time domain resource allocation field of the DCI may include information indicating an entry in a radio resource control (RRC) configuration table for each of the scheduled serving cells, and the number of information blocks constituting a second field of the DCI may be determined by the number of the scheduled serving cells.

According to the exemplary embodiment, the first field may be mapped to a fixed location within a payload of the DCI.

In step 705, the base station may transmit at least one or more of data channel(s) on the basis of scheduling information for the N number of serving cell(s) and included in the DCI (where N is a positive integer).

According to the exemplary embodiment, a plurality of serving cells is identified as a cell group on the basis of the configuration information, and the plurality of serving cells may include the N number of serving cell(s).

FIG. 8 is a view illustrating a configuration diagram of a UE in a wireless communication system according to various exemplary embodiments of the present disclosure. The configuration illustrated in FIG. 8 may be understood as a configuration of a UE. Hereinafter, the terms used below, such as "~ part" and "~ group" mean a unit for processing at least one function or operation and may be implemented by a combination of hardware and/or software.

Referring to FIG. 8, a UE may include a communication unit 810, a storage unit 820, and a control unit 830.

The communication unit 810 may perform functions for transmitting and receiving signals through a wireless channel. For example, the communication unit 810 may perform a conversion function between a baseband signal and a bit stream according to the physical layer standards of a system. For example, when transmitting data, the communication unit 810 may generate complex symbols by encoding and modulating a transmission bit stream. When receiving data, the communication unit 810 may restore a reception bit stream by demodulating and decoding the baseband signal. In addition, the communication unit 810 may upconvert a baseband signal into an RF band signal and then transmit the RF band signal through an antenna, and downconvert the RF band signal received through the antenna into the baseband signal. For example, the communication unit 810 may include a transmission filter, a reception filter, an amplifier, a mixer, an oscillator, a DAC, an ADC, etc.

In addition, the communication unit 810 may include a plurality of transmission and reception paths. Furthermore, the communication unit 810 may include at least one antenna array composed of a plurality of antenna elements. In terms of hardware, the communication unit 810 may include a digital circuit and an analog circuit (e.g., a radio frequency integrated circuit (RFIC)). Here, the digital circuit and the analog circuit may be implemented in one package. In addition, the communication unit 810 may include a plurality of RF chains. Furthermore, the communication unit 810 may perform beamforming.

The communication unit 810 transmits and receives signals as described above. Accordingly, all or part of the communication unit 810 may be referred to as a "transmitter", a "receiver", or a "transceiver". In addition, in the following description, transmission and reception, which are performed through a wireless channel, may be used to mean that the above-described processing is performed by the communication unit 810.

The storage unit 820 may store data such as fundamental programs, applications, and setting information for the operations of UE. The storage unit 820 may be composed of a volatile memory, a non-volatile memory, or a combination of the volatile memory and non-volatile memory. In addition, the storage unit 820 may provide stored data according to a request of the control unit 830.

The control unit 830 may control the overall operations of the UE. For example, the control unit 830 may transmit and receive signals through the communication unit 810. In addition, the control unit 830 may record and read data in the storage unit 820. The control unit 830 may perform protocol stack functions required by communication standards. To this end, the control unit 830 may include at least one processor or microprocessor, or may be a part of the processor. In addition, a part of the communication unit 810 and the control unit 830 may be referred to as a communication processor (CP).

According to various exemplary embodiments, the controller 830 may control the UE to perform operations according to various exemplary embodiments described above.

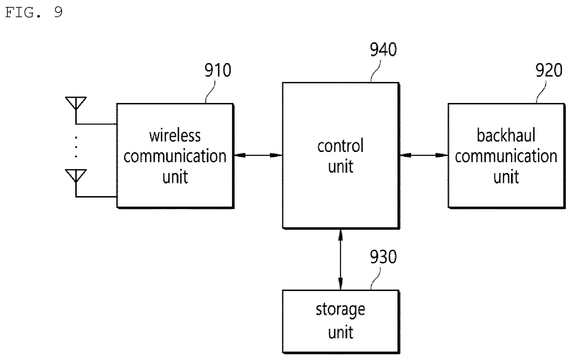

FIG. 9 is a view illustrating a configuration diagram of a base station in a wireless communication system according to various exemplary embodiments of the present disclosure. The configuration illustrated in FIG. 9 may be understood as a configuration of a base station. Hereinafter, the terms used below, such as "~ part" and "~ group" mean a unit for processing at least one function or operation and may be implemented by a combination of hardware and/or software.

Referring to FIG. 9, the base station may include a wireless communication unit 910, a backhaul communication unit 920, a storage unit 930, and a control unit 940.

The wireless communication unit 910 may transmit and receive wireless signals through a wireless channel. For example, the wireless communication unit 910 may perform a conversion function between a baseband signal and a bit stream according to the physical layer standards of a system. In addition, when transmitting data, the wireless communication unit 910 may generate complex symbols by encoding and modulating a transmission bit stream. When receiving data, the communication unit 910 may restore a reception bit stream by demodulating and decoding the baseband signal.

The wireless communication unit 910 may upconvert a baseband signal into a radio frequency (RF) band signal and then transmit the RF band signal through an antenna, and downconvert the RF band signal received through the antenna into the baseband signal. To this end, the wireless communication unit 910 may include a transmission filter, a reception filter, an amplifier, a mixer, an oscillator, a digital to analog converter (DAC), an analog to digital converter (ADC), and the like.

The wireless communication unit 910 may include a plurality of transmission and reception paths, and the wireless communication unit 910 may include at least one antenna array composed of a plurality of antenna elements.

In terms of hardware, the wireless communication unit 910 may include a digital unit and an analog unit, and the analog unit may include a plurality of sub-units according to operation power, operation frequencies, etc. The digital unit may be implemented with at least one processor (e.g., a digital signal processor (DSP)).

The wireless communication unit 910 may transmit and receive wireless signals as described above. Accordingly, all or part of the wireless communication unit 910 may be referred to as a "transmitter", a "receiver", or a "transceiver". In addition, in the following description, transmission and reception, which are performed through a wireless channel, may include that the above-described processing is performed by the wireless communication unit 910.

The backhaul communication unit 920 may provide interfaces for communicating with other nodes in a network. That is, the backhaul communication unit 920 may convert a bit stream transmitted from the base station to another node, for example, another access node, another base station, an upper node, a core network, etc., into a physical signal, and convert the physical signal received from another node into the bit stream.

The storage unit 930 may store data such as fundamental programs, applications, and configuration information for the operations of the base station. The storage unit 930 may be composed of a volatile memory, a non-volatile memory, or a combination of the volatile memory and non-volatile memory. In addition, the storage unit 930 may provide stored data according to a request of the control unit 940.

The control unit 940 may control the overall operations of the base station. For example, the control unit 940 may transmit and receive signals through the wireless communication unit 910 or the backhaul communication unit 920. In addition, the control unit 940 may record and read data in the storage unit 930. In addition, the control unit 940 may perform protocol stack functions required by communication standards.

To this end, the control unit 940 may include at least one processor.

According to various exemplary embodiments of the present disclosure, the control unit 940 may control the base stations described above to perform operations according to the various exemplary embodiments.

The methods according to the exemplary embodiments described in the claims or specification of the present disclosure may be implemented in the form of hardware, software, or a combination of hardware and software.

When implemented in software, a computer readable storage medium for storing one or more programs (i.e., software modules) may be provided. One or more programs stored in the computer-readable storage medium are configured for execution by one or more processors in an electronic device. One or more programs include instructions that cause the electronic device to execute the methods according to the exemplary embodiments described in the claims or specification of the present disclosure.

Such programs (i.e., software modules, software) may be stored in a random access memory, a non-volatile memory including a flash memory, a read only memory (ROM), an electrically erasable programmable read only memory (EEPROM), a magnetic disc storage device, a compact disc-ROM (CD-ROM), a digital versatile discs (DVDs) or other forms of optical storage devices, or a magnetic cassette. Alternatively, such programs may be stored in a memory composed of a combination of some or all thereof. In addition, a plurality of configuration memories may also be included.

In addition, the programs may be stored in an attachable storage device that may be accessed through a communication network such as the Internet, an intranet, a local area network (LAN), a wide area network (WAN), or a storage area network (SAN), or through a communication network composed of a combination thereof. Such a storage device may be connected to a device for performing the exemplary embodiments of the present disclosure through an external port. In addition, a separate storage device on a communication network may be connected to a device for performing the exemplary embodiments of the present disclosure.

In the specific exemplary embodiments of the present disclosure described above, the components included in the disclosure are expressed in singular or plural numbers according to the specific exemplary embodiments presented. However, the singular or plural expressions are selected appropriately for the presented situation for convenience of description, and the present disclosure is not limited to the singular or plural components. Even components expressed in plural may be composed of a single component, or even a component expressed in a singular number may be composed of a plurality of components.

Meanwhile, in the detailed description of the present disclosure, specific exemplary embodiments have been described, but various modifications may be made without departing from the scope of the present disclosure. Therefore, the scope of the present disclosure should not be limited to the exemplary embodiments described above, but should be defined not only by the scope of claims described later, but also by those equivalent to the scope of these claims.

## Claims

1. A method performed by a user equipment (UE) in a wireless communication system, the method comprising:
receiving configuration information from a base station (BS) ;
designating a plurality of serving cells comprising a first serving cell and a second serving cell as a cell group on the basis of the configuration information;
performing a physical downlink control channel (PDCCH) monitoring operation for receiving a downlink control information (DCI) for scheduling the cell group in a PDCCH search space set;
receiving the DCI from the base station on the basis of the PDCCH monitoring operation;
identifying scheduling information for N number of the serving cell(s) belonging to the cell group; and
receiving data channel(s) in at least one of the N number of the serving cell(s) on the basis of the scheduling information,
wherein the PDCCH monitoring operation comprises PDCCH blind decoding operations performing L times,
wherein the PDCCH blind decoding operations performing L times are counted only for scheduling the first serving cell, where N and L are positive integers,
wherein the PDCCH blind decoding operations performing L times count the number of PDCCH blind decodings for scheduling the second serving cell as 0, and
wherein the second serving cell is excluded from the number (#) of scheduled cells.

2. The method of claim 1, wherein at least one piece of the configuration information of the PDCCH search space set is configured in the first serving cell, and
wherein the PDCCH search space set for only the second serving cell is not configured in the UE.

3. The method of claim 1, wherein the total number of PDCCH blind decodings performed by the UE for scheduling the first serving cell is determined by the number of scheduled cells, and
wherein the number of scheduled cells is counted for each subcarrier spacing of a scheduling cell.

4. The method of claim 1, wherein the DCI is received from a third serving cell belonging to the base station, and
wherein the third serving cell is not the second serving cell.

5. The method of claim 1, wherein each of the serving cells scheduled by the DCI is indicated by a first field of the DCI,
wherein a time domain resource allocation field of the DCI comprises information indicating an entry in a radio resource control (RRC) configuration table for each of the scheduled serving cells, and
wherein the number of information blocks constituting a second field of the DCI is determined by the number of the scheduled serving cells.

6. The method of claim 5, wherein the first field is mapped to a fixed location within a payload of the DCI.

7. The method of claim 1, further comprising:
identifying at least one serving cell(s) corresponding to at least one of information block(s) as not being scheduled by the DCI in a case where the at least one of the information block(s) constituting a frequency domain resource allocation field is configured as a specific code point, and
wherein the frequency domain resource allocation field is included in the DCI, and the at least one serving cell(s) is included in the cell group.

8. The method of claim 7, wherein whether to activate a dormant bandwidth part in a secondary cell configured in the UE on the basis of a field group corresponding to a serving cell having the lowest serving cell index among the at least one of the serving cells identified as not being scheduled is indicated to the UE, and
wherein the field group is comprised in the DCI.

9. The method of claim 8, wherein the secondary cell is not comprised in the N number of the serving cells.

10. The method of claim 1, wherein a PDCCH monitoring skipping period is indicated to the UE on the basis of the DCI, and
wherein the PDCCH search space set is not monitored by the UE in the indicated PDCCH monitoring skipping period.

11. A method performed by a base station in a wireless communication system, the method comprising:
transmitting configuration information to a user equipment (UE) ;
transmitting a downlink control information (DCI) to the UE; and
transmitting at least one of data channel(s) on the basis of scheduling information for N number of serving cells comprised in the DCI,
wherein N is a positive integer,
wherein the base station comprises the plurality of serving cells comprising a first serving cell and a second serving cell,
wherein the plurality of serving cells is identified as a cell group on the basis of the configuration information, and
wherein the plurality of serving cells comprises the N number of serving cell(s).

12. The method of claim 11, wherein the DCI is received from a third serving cell belonging to the base station, and
wherein the third serving cell is not the second serving cell.

13. The method of claim 11, wherein each of the serving cells scheduled by the DCI is indicated by a first field of the DCI,
wherein a time domain resource allocation field of the DCI comprises information indicating an entry in a radio resource control (RRC) configuration table for each of the scheduled serving cells, and
wherein the number of information blocks constituting a second field of the DCI is determined by the number of the scheduled serving cells.

14. The method of claim 13, wherein the first field is mapped to a fixed location within a payload of the DCI.

15. A user equipment (UE) in a wireless communication system, the user equipment comprising:
at least one transceiver; and
a processor operably connected to the at least one transceiver,
wherein the at least one processor is configured to receive configuration information from a base station (BS), designate a plurality of serving cells comprising a first serving cell and a second serving cell as a cell group on the basis of the configuration information, perform a PDCCH monitoring operation for receiving a downlink control information (DCI) for scheduling the cell group in a physical downlink control channel (PDCCH) search space set, receive the DCI from the base station on the basis of the PDCCH monitoring operation, identify scheduling information for N number of the serving cell(s) belonging to the cell group, and receive data channel (s) in at least one of the N number of the serving cell(s) on the basis of the scheduling information,
wherein the PDCCH monitoring operation comprises PDCCH blind decoding operations performing L times,
wherein the PDCCH blind decoding operations performing L times are counted only for scheduling the first serving cell, where N and L are positive integers,
wherein the PDCCH blind decoding operations performing L times count the number of PDCCH blind decodings for scheduling the second serving cell as 0, and
wherein the second serving cell is excluded from the number (#) of scheduled cells.
